# EUROPÄISCHE PATENTSCHRIFT

(11) **EP 0 904 883 B1**
(45) Veröffentlichungstag und Bekanntmachung des Hinweises auf die Patenterteilung: **03.03.2004**
(21) Anmeldenummer: 98118066.4
(22) Anmeldetag: 24.09.1998
(51) Int. Cl.: B23K 9/067

(54) **Verfahren zum Zünden eines Lichtbogens zwischen einem Werkstück und einer abschmelzenden Elektrode**
Method for initiating an arc between a workpiece and a melting electrode
Méthode pour l'allumage d'un arc entre une pièce et une électrode fusible

(30) Priorität: 29.09.1997 AT 164897; 10.03.1998 AT 41098
(43) Veröffentlichungstag der Anmeldung: 31.03.1999
(60) Teilanmeldung: 03010540.7
(73) Patentinhaber: Fronius International GmbH, 4643 Pettenbach (AT)
(72) Erfinder: Artelsmair, Josef, 4552 Wartberg/Krems (AT)
(74) Vertreter: Secklehner, Günter, Dr.

(56) Entgegenhaltungen:
- EP-A- 0 324 960
- EP-A- 0 547 417
- DE-A- 3 523 879

## Beschreibung

Die Erfindung betrifft unterschiedliche Verfahren zum Zünden eines Lichtbogens zwischen einem Werkstück und einer abschmelzenden Elektrode sowie eine Einrichtung zum Durchführen dieses Verfahrens, wie diese in den Oberbegriffen der Ansprüche 1, 14 und 25 beschrieben sind.

Aus der DE 40 32 618 A1 ist ein Verfahren zum Zünden eines Lichtbogens nach dem Lift-Arc Prinzip bekannt, bei dem zum Zünden des Lichtbogens zwei Energiequellen parallel geschaltet sind. Dabei wird der Schweißdraht von einem Drahtvorschubgerät bis zum Berühren an das Werkstück zubewegt, wodurch ein Kurzschluß geschaffen wird. Anschließend wird der Schweißdraht durch die zusätzliche Energiequelle mit einer geringen Stromstärke vom Werkstück abgehoben bzw. zurückgezogen, sodaß aufgrund der Aufhebung des Kurzschlusses eine Zündung des Lichtbogens erfolgt. Die Höhe des Stromes ist dabei so definiert, daß ein Abschmelzen des Materials vom Schweißdraht verhindert wird. Nach Ablauf einer voreinstellbaren Zeitdauer bzw. nach dem Zünden des Lichtbogens wird der Schweißdraht wiederum in Richtung des Werkstückes bewegt, wobei nunmehr die Versorgung des Lichtbogens mit einem hohen Strom über die primäre Energiequelle erfolgt, sodaß ein Abschmelzen des Schweißdrahtes gewährleistet ist. Nachteilig ist hierbei, daß aufgrund der Zündung des Lichtbogens über eine Hilfsstromquelle mit geringem Strom beim Abheben des Schweißdrahtes nur eine geringe Lichtbogenlänge erzielt werden kann, wodurch es durch Aufschmelzen des Schweißdrahtes zu einem weiteren Kurzschluß kommen kann, da das aufgeschmolzene Material beim Übergang vom Schweißdraht zum Werkstück in das Schmelzbad gesaugt wird, und somit aufgrund der geringen Lichtbogenlänge es zu einem weiteren Kurzschluß führen kann.

Weiters ist aus der DE 37 31 180 C2 ein Verfahren zum Zünden eines Lichtbogens bekannt, bei dem die Versorgung des Lichtbogens bzw. die Zündung des Lichtbogens über eine geregelte Energiequelle erfolgt. Hierzu wird der Schweißdraht in Richtung des Werkstückes bewegt, sodaß ein Kurzschluß zwischen dem Schweißdraht und dem Werkstück entsteht, wobei gleichzeitig der Schweißdraht von der Energiequelle mit einem geringen Strom versorgt wird, sodaß bei der Bildung des Kurzschlusses der Lichtbogen durch Abschmelzen des Schweißdrahtes mit einer geringen Lichtbogenlänge gezündet wird. Diese Energie bzw. die Höhe des Stromes zum Zünden des Lichtbogens ist derartig ausgelegt, daß ein Aufschmelzen bzw. Abschmelzen des Schweißdrahtes erfolgt. Anschließend wird mit wachsender Lichtbogenlänge der Energiebedarf bzw. der Strom am Schweißdraht erhöht, sodaß nach Erreichen einer einstellbaren Schwelle ein definierter Energieimpuls bzw. Stromimpuls ausgesendet wird, und somit ein Ablösen des Tropfens am Schweißdrahtende erzielt wird. Nachteilig ist hierbei, daß es bei einem derartigen Verfahren zur Bildung eines satten Kurzschlusses kommen kann, d.h., daß bei Erlöschen des Lichtbogens das aufgeschmolzene Material mit dem Werkstück zusammen klebt, sodaß dieser satte Kurzschluß nurmehr mit einem extrem hohen Stromimpuls über eine gewisse Zeitdauer behoben werden kann, wodurch Schweißspritzer und Einbrände neben der Schweißstelle entstehen.

Aus der EP 0 547 417 ist ein Zündverfahren bekannt, bei dem bei jedem Stromnulldurchgang - Wechselstrom-Schweißverfahren-, in dem der Lichtbogen erlischt, eine neuerliche Zündung des Lichtbogens erfolgt, wobei zum erstmaligen Zünden des Lichtbogens ein Zündprozess, beispielsweise ein Hochfrequenz-Zündverfahren, notwendig ist.

Ein weiteres, aus dem Stand der Technik bekanntes Zündverfahren ist in der EP 0324 960 A1 geoffenbart.

Der vorliegenden Erfindung liegt die Aufgabe zugrunde, ein Verfahren zum Zünden eines Lichtbogens zwischen einem Werkstück und einer abschmelzenden Elektrode, insbesondere einem Schweißdraht zu schaffen, bei der eine sichere und stabile Zündung des Lichtbogens erreicht wird.

Diese Aufgabe der Erfindung wird durch die Merkmale des Anspruches 1 gelöst. Vorteilhaft ist hierbei, daß durch Anlegen einer hohen Leerlaufspannung am Schweißdraht ein sehr steiler Stromanstieg beim Berühren des Schweißdrahtes mit dem Werkstück geschaffen wird, wodurch ein satter Kurzschluß verhindert wird. Ein weiterer Vorteil liegt darin, daß nachdem der Lichtbogen gezündet wurde, die Versorgung bzw. Stabilisierung des Lichtbogens über die primäre Energiequelle erfolgt, sodaß erst nach Erreichen einer bestimmten, voreinstellbaren Lichtbogenlänge der tatsächliche Schweißprozeß durchgeführt wird.

Weitere vorteilhafte Maßnahmen sind in den Ansprüchen 2 bis 13 beschrieben. Die damit erzielbaren Vorteile sind der detaillierten Figurenbeschreibung zu entnehmen.

Die Erfindung umfaßt weiters auch ein weiteres Verfahren zum Zünden eines Lichtbogens zwischen einem Werkstück und einer abzuschmelzenden Elektrode, wie dies im Oberbegriff des Anspruches 14 beschrieben ist.

Diese Aufgabe der Erfindung wird durch die Merkmale im Kennzeichenteil des Anspruches 14 gelöst. Vorteilhaft ist hierbei, daß das Anlegen einer hohen Leerlaufspannung erst zum Zeitpunkt des Zündens des Lichtbogens erfolgt und somit ein Anliegen der hohen Leerlaufspannung an den Schweißbuchsen vermieden wird. Über den elektronischen Schalter, der in Serie zur Konstant-Spannungsquelle liegt, wird diese zum Zeitpunkt der Drahtberührung mit dem Werkstück sehr schnell, beispielsweise innerhalb 1 ms, zugeschaltet. Die hohe Leerlaufspannung bewirkt einen sehr steilen Stromanstieg beim Berühren des Schweißdrahtes mit dem Werkstück, wodurch ein satter Kurzschluß verhindert wird. Ein weiterer Vorteil liegt darin, daß, nachdem der Lichtbogen gezündet wurde, die Versorgung bzw. Stabilisierung des Lichtbogens über die primäre Energiequelle erfolgt, sodaß erst nach Erreichen einer bestimmten, voreinstellbaren Lichtbogenlänge der tatsächliche Schweißprozeß durchgeführt wird.

Weitere vorteilhafte Maßnahmen sind in den Ansprüchen 15 bis 24 beschrieben. Die damit erzielbaren Vorteile sind der detaillierten Figurenbeschreibung zu entnehmen.

Die Erfindung umfaßt weiters auch eine Einrichtung zur Durchführung des Verfahrens, wie dies im Oberbegriff des Anspruches 25 beschrieben ist.

Diese Einrichtung ist durch die Merkmale im Kennzeichenteil des Anspruches 25 gekennzeichnet. Vorteilhaft ist hierbei, daß mit der einfach aufgebauten Einrichtung erreicht wird, daß an den Schweißbuchsen nicht die hohe Leerlaufspannung anliegt. Darüber hinaus ist der Vorteil gegeben, daß durch den einfachen Aufbau dieser Einrichtung eine große Wirtschaftlichkeit erzielt wird.

Weitere vorteilhafte Maßnahmen sind in den Ansprüchen 26 bis 31 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispielen näher erläutert.

Es zeigen:
- Fig. 1: eine schematische Darstellung eines Schweißgerätes mit den einzelnen Komponenten in vereinfachter, schematischer Darstellung;
- Fig. 2: ein Blockschaltbild der Schweißstromquelle mit parallel geschalteter Spannungsquelle in vereinfachter und schematischer Darstellung;
- Fig. 3: einen Vorschubgeschwindigkeitsverlauf für ein Drahtvorschubgerät in vereinfachter und schematischer Darstellung für das Ausführungsbeispiel nach Fig. 2;
- Fig. 4: einen Spannungsverlauf am Schweißdraht in vereinfachter, schematischer Darstellung für das Ausführungsbeispiel nach Fig. 2;
- Fig. 5: einen Stromverlauf am Schweißdraht in vereinfachter, schematischer Darstellung für das Ausführungsbeispiel nach Fig. 2;
- Fig. 6: ein Blockschaltbild für die Schweißstromquelle in vereinfachter, schematischer Darstellung;
- Fig. 7: einen Vorschubgeschwindigkeits- und Richtungsverlauf für das Drahtvorschubgerät nach Fig. 6, in vereinfachter, schematischer Darstellung;
- Fig. 8: einen Spannungsverlauf am Schweißdraht für das Ausführungsbeispiel nach Fig. 6, in vereinfachter, schematischer Darstellung;
- Fig. 9: einen Stromverlauf am Schweißdraht für das Ausfuhrungsbeispiel nach Fig. 6, in vereinfachter, schematischer Darstellung;
- Fig. 10: ein Blockschaltbild eines weiteren Ausführungsbeispiels der Schweißstromquelle gemäß Fig. 2 zur Erzielung des erfindungsgemäßen Verfahrensablaufes gemäß den Fig. 3 bis 5;
- Fig. 11: ein Blockschaltbild der Schweißstromquelle mit der Konstant-Stromquelle und der erfindungsgemäß parallel geschalteten Konstant-Spannungsquelle in vereinfachter und schematischer Darstellung;
- Fig. 12: einen Vorschubgeschwindigkeitsverlauf für ein Drahtvorschubgerät in vereinfachter und schematischer Darstellung für das Ausführungsbeispiel nach Fig. 11;
- Fig. 13: einen Spannungsverlauf am Schweißdraht in vereinfachter, schematischer Darstellung für das Ausführungsbeispiel nach Fig. 11;
- Fig. 14: einen Stromverlauf am Schweißdraht in vereinfachter, schematischer Darstellung für das Ausführungsbeispiel nach Fig. 11;
- Fig. 15: ein Blockschaltbild eines weiteren Ausführungsbeispiels der Schweißstromquelle gemäß Fig. 11 zur Erzielung des erfindungsgemäßen Verfahrensablaufes gemäß den Fig. 12 bis 14.

Einführend sei festgehalten, daß in den unterschiedlich beschriebenen Ausführungsformen gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können.

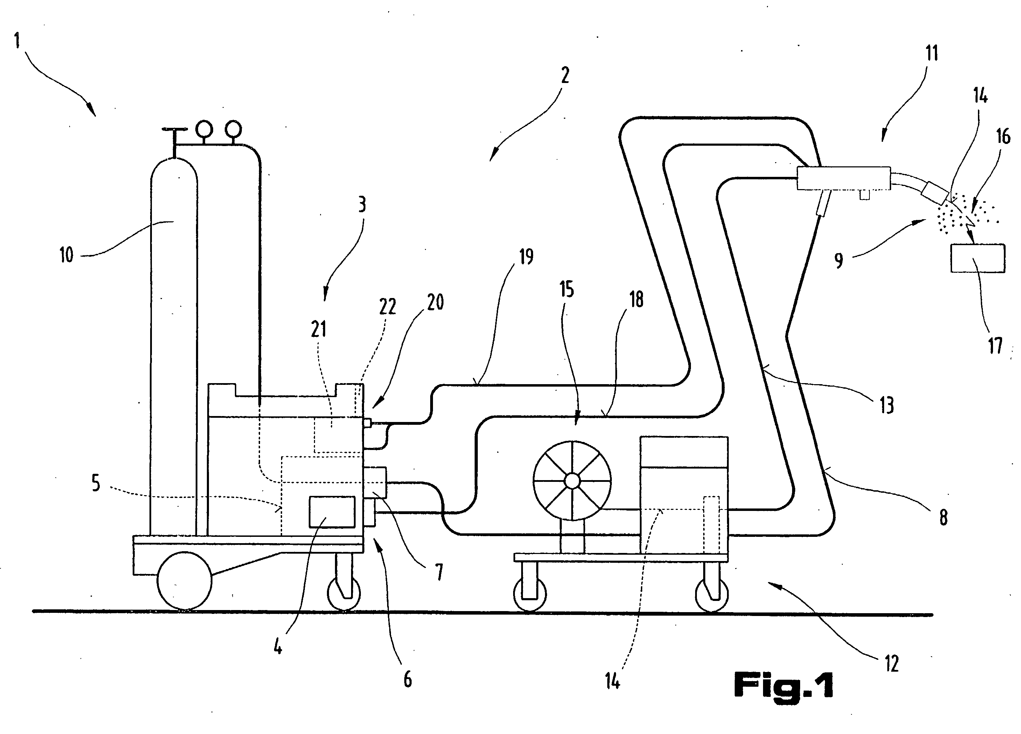

In Fig. 1 ist ein Schweißgerät 1, insbesondere eine Schweißstromquelle 2, für verschiedenste Schweißverfahren, wie z.B. zum MIG-/MAG-Schweißen bzw. TIG-Schweißen gezeigt. Das Schweißgerät 1, insbesondere die Schweißstromquelle 2, umfaßt eine Konstant-Stromquelle 3 mit einem Leistungsteil 4, eine Steuervorrichtung 5 und ein dem Leistungsteil 4 bzw. der Steuervorrichtung 5 zugeordnetes Umschaltglied 6. Das Umschaltglied 6 bzw. die Steuervorrichtung 5 ist mit einem Steuerventil 7 verbunden, welches in einer Versorgungsleitung 8 für ein Gas 9, insbesondere ein Schutzgas, wie beispielsweise Stickstoff, Helium oder Argon und dergleichen, zwischen einem Gasspeicher 10 und einem Schweißbrenner 11 angeordnet ist.

Zudem wird über die Steuervorrichtung 5 auch noch ein Drahtvorschubgerät 12 angesteuert, wobei über eine Versorgungsleitung 13 ein Schweißdraht 14 von einer Vorratstrommel 15 in den Bereich des Schweißbrenners 11 zugeführt wird. Die Energie zum Aufbau eines Lichtbogens 16 zwischen dem Schweißdraht 14 und einem Werkstück 17 wird über eine Versorgungsleitung 18 vom Leistungsteil 4 der Konstant-Stromquelle 3 dem Schweißbrenner 11 bzw. dem Schweißdraht 14 zugeführt.

Zum Kühlen des Schweißbrenners 11 wird über einen Kühlkreislauf 19 der Schweißbrenner 11 unter Zwischenschaltung eines Strömungswächters 20 mit einem Wasserbehälter 21 verbunden, sodaß bei der Inbetriebnahme des Schweißbrenners 11 der Kühlkreislauf 19 von der Steuervorrichtung 5 gestartet werden kann, wodurch eine Kühlung des Schweißbrenners 11 erreicht wird.

Weiters weist das Schweißgerät 1 eine Ein- und/oder Ausgabevorrichtung 22, wie z.B. Bedienelemente, eine Tastatur und/oder ein Display auf, durch die die unterschiedlichsten Schweißparameter bzw. Betriebsarten des Schweißgerätes 1 eingestellt werden können. Dabei werden die über die Ein- und/oder Ausgabevorrichtung 22 eingestellten bzw. ausgewählten Werte an die Steuervorrichtung 5 weitergeleitet, sodaß anschließend von der Steuervorrichtung 5 die einzelnen Komponenten entsprechend den vorgegebenen Werten bzw. den aus diesen Werten ermittelten Steuerfunktionen aktiviert werden können.

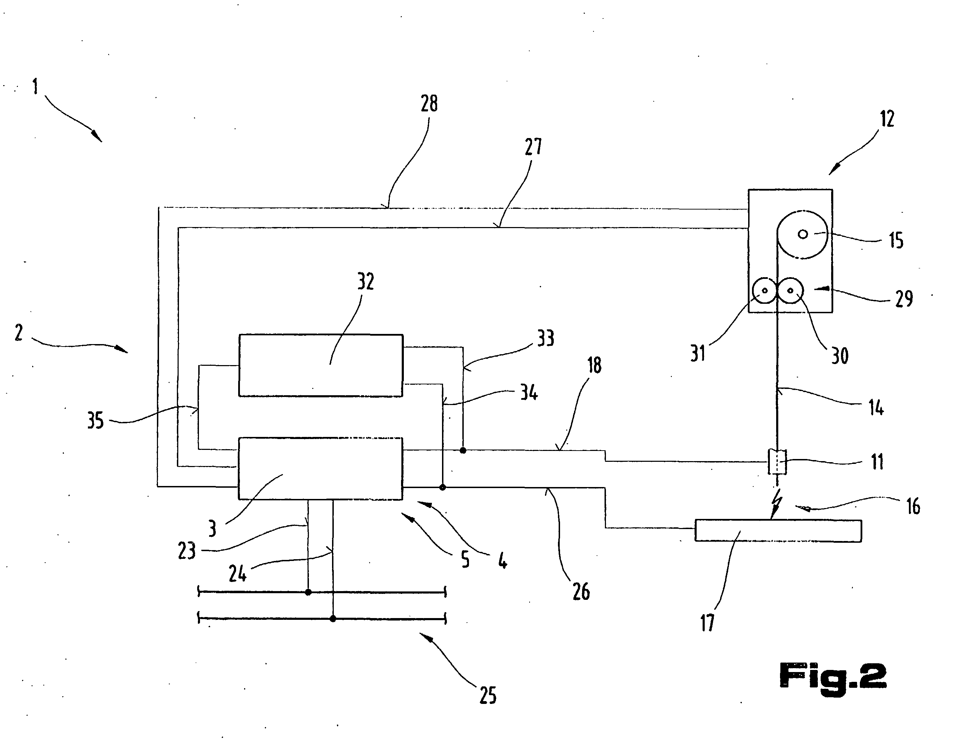

In den Fig. 2 bis 5 ist ein Verfahrensablauf zum Zünden des Lichtbogens 16 zwischen dem Werkstück 17 und einer abschmelzenden Elektrode, insbesondere dem Schweißdraht 14, gezeigt, wobei in Fig. 2 ein vereinfachtes Blockschaltbild der Schweißstromquelle 2, insbesondere des Schweißgerätes 1, dargestellt ist. Bei diesem Blockschaltbild sind in der Konstant-Stromquelle 3 die Komponenten des Leistungsteil 4 und der Steuervorrichtung 5, wie sie in Fig. 1 beschrieben sind, integriert.

Bei dem dargestellten Blockschaltbild sind die weiteren in Fig. 1 beschriebenen Komponenten mit der Konstant-Stromquelle 3 leitungsverbunden, sodaß eine Aktivierung, beispielsweise des Kühlkreislaufes 19, durch die Konstant-Stromquelle 3, insbesondere der Steuervorrichtung 5, möglich ist. In Fig. 2 sind nur die für das Zünden des Lichtbogens 16 notwendigen Komponenten dargestellt. Dazu ist die Konstant-Stromquelle 3 über Versorgungsleitungen 23, 24 mit einem Spannungsversorgungsnetz 25 verbunden, sodaß die einzelnen Komponenten des Schweißgerätes 1 mit Strom und Spannung versorgt werden können.

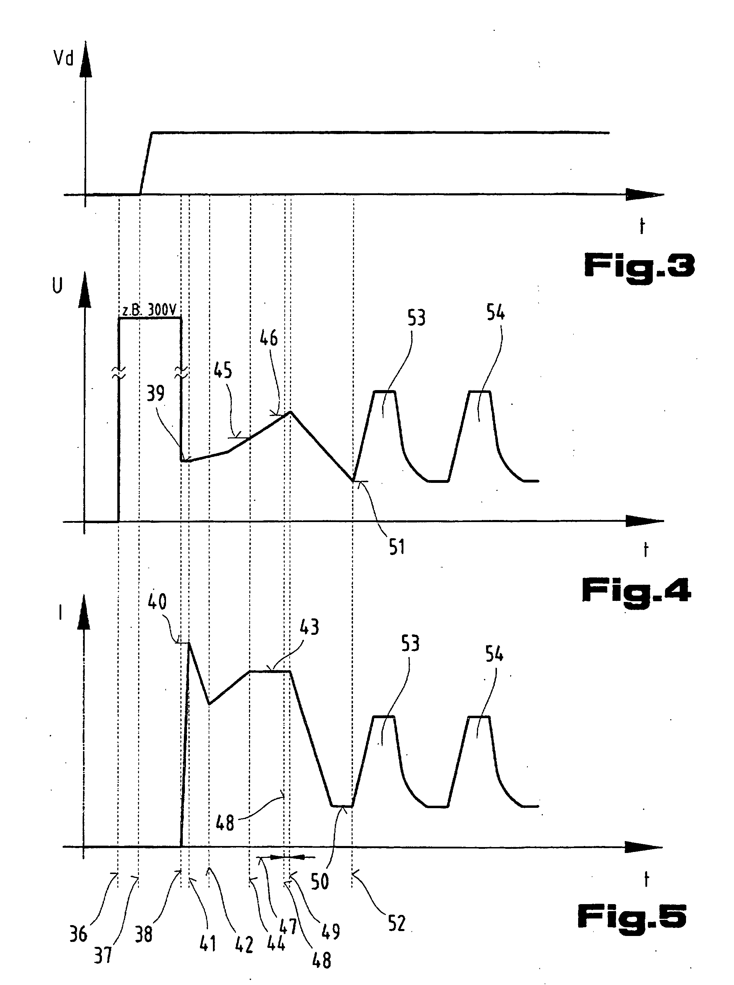

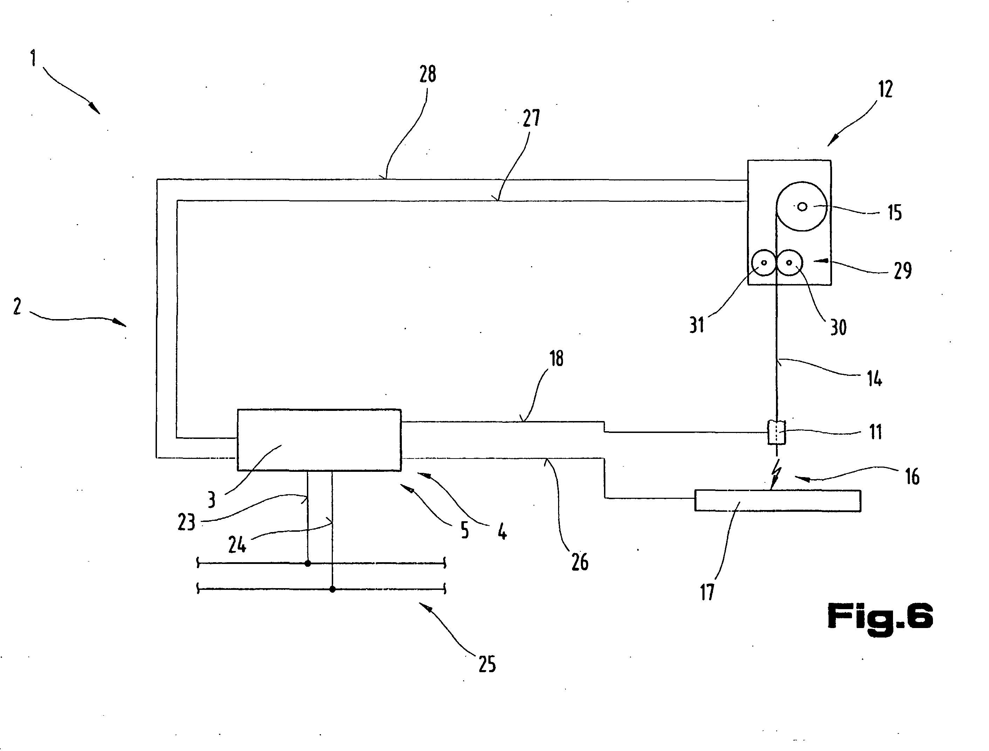

In den Fig. 3 bis 5 sind in Form von Diagrammen Verfahrensabläufe dargestellt, wobei in den Fig. 4 und 5 auf der Ordinate die Spannung U bzw. der Strom I sowie auf der Abszisse die Zeit t aufgetragen sind.

Bei dem dargestellten Blockschaltbild in Fig. 2 ist die Konstant-Stromquelle 3 über die Versorgungsleitung 18 mit dem schematisch dargestellten Schweißbrenner 11 verbunden, wogegen das Werkstück 17 über eine weitere Versorgungsleitung 26 mit der Konstant-Stromquelle 3 verbunden ist. Bei dem dargestellten Ausführungsbeispiel wird der Schweißbrenner 11 über die Versorgungsleitung 18 mit dem positiven Potential versorgt, wogegen das negative Potential über die Versorgungsleitung 26 am Werkstück 17 angelegt ist. Gleichzeitig weist die Konstant-Stromquelle 3 Steuerleitungen 27, 28 auf, die mit dem Drahtvorschubgerät 12 verbunden sind. Bei dem Drahtvorschubgerät 12 sind die Vorratstrommel 15 sowie eine Fördervorrichtung 29 zum Befördern des Schweißdrahtes 14 an den Schweißbrenner 11 dargestellt. Die Fördervorrichtung 29 kann aus zwei Förderrollen 30, 31 gebildet werden, wobei zumindest eine der beiden Förderrollen 30, 31 über einen nicht dargestellten Motor angetrieben wird.

Weiters ist in Fig. 2 eine zusätzliche Konstant-Spannungsquelle 32 parallel zur Konstant-Stromquelle 3 geschaltet, d.h., daß die Ausgänge der Konstant-Spannungsquelle 32 über Leitungen 33, 34 mit den Versorgungsleitungen 18, 26 bzw. den Ausgangen der Konstant-Stromquelle 3 verbunden sind. Dabei ist das positive Potential der Konstant-Spannungsquelle 32 wiederum mit dem positiven Potential der Konstant-Stromquelle 3 zusammengeschaltet. Damit die Konstant-Spannungsquelle 32 von der Steuervorrichtung 5 angesteuert werden kann, ist eine Steuerleitung 35 zwischen der Steuervorrichtung 5, insbesondere der Konstant-Stromquelle 3 und der Konstant-Spannungsquelle 32 dargestellt.

Die Konstant-Spannungsquelle 32 ist derartig ausgebildet, daß sie den Schweißbrenner 11 mit einer sehr hohen Leerlaufspannung, beispielsweise zwischen 200 V und 500 V, versorgt. Die Konstant-Stromquelle 3 versorgt den Schweißbrenner 11 mit dem Schweißstrom, der beispielsweise zwischen 20 A und 500 A liegen kann.

Es kann nunmehr gesagt werden, daß die zusätzlich angeordnete und parallel geschaltete Konstant-Spannungsquelle 32 für das Zünden des Lichtbogens 16 verwendet wird, wobei bei einem Schweißprozeß nach dem Zünden des Lichtbogens 16 die Konstant-Spannungsquelle 32 deaktiviert ist und der Schweißprozeß von der Konstant-Stromquelle 3 mit Energie versorgt wird.

Bei den Diagrammen, wie sie in den Fig. 3 bis 5 dargestellt sind, ist ein Kurvenverlauf für die Drahtvorschubgeschwindigkeit des Drahtvorschubgerätes 12 - Fig. 3 - und ein Spannungsverlauf - Fig. 4 - sowie Stromverlauf - Fig. 5 - an der abschmelzenden Elektrode, insbesondere am Schweißdraht 14 dargestellt.

Möchte nunmehr ein Benutzer einen Schweißprozeß durchführen, so muß zuerst der Lichtbogen 16 gezündet werden. Dazu aktiviert der Benutzer das Schweißgerät 1, sodaß alle Komponenten des Schweißgerätes 1, wie sie in Fig. 1 beschrieben sind, mit Strom und Spannung versorgt werden. Nachdem der Benutzer über die Ein- und/oder Ausgabevorrichtung 22 alle Einstellungen für einen Schweißprozeß vorgenommen hat, kann der Benutzer beispielsweise durch Aktivieren eines Tasters, der beispielsweise am Schweißbrenner 11 angeordnet ist, den Schweißprozeß starten.

Nach dem Starten des Schweißprozesses wird von der Steuervorrichtung 5 die Konstant-Stromquelle 3, insbesondere das Leistungsteil 4 und die Konstant-Spannungsquelle 32, aktiviert, d.h., daß die Konstant-Stromquelle 3 und gleichzeitig die Konstant-Spannungsquelle 32 den Schweißbrenner 11 mit Energie versorgt. Am Schweißbrenner 11 wird die über die beiden Energiequellen, insbesondere über die Konstant-Spannungsquelle 32 und die Konstant-Stromquelle 3 zugeführte Energie an den Schweißdraht 14 übergeben. Das Starten des Schweißprozesses ist aus den Diagrammen der Fig. 3 bis 5 zum Zeitpunkt 36 dargestellt. Wie nun aus den beiden Kurvenverläufen der Fig. 4 und 5 zu ersehen ist, wird der Schweißdraht 14 von der Konstant-Spannungsquelle 32 mit einer sehr hohen Gleichspannung versorgt. Die Spannung der Konstant-Spannungsquelle 32 kann dabei zwischen 200 und 500 V, insbesondere 300 V, betragen.

Nachdem die Konstant-Stromquelle 3 und die Konstant-Spannungsquelle 32 aktiviert wurden, wird zu einem weiteren Zeitpunkt 37 von der Steuervorrichtung 5 das Drahtvorschubgerät 12 aktiviert, sodaß der Schweißdraht 14 von der Vorratstrommel 15 über die Fördervorrichtung 29 in Richtung des Schweißbrenners 11 und somit zum Werkstück 17 bewegt wird. Selbstverständlich ist es möglich, daß das Aktivieren des Drahtvorschubgerätes 12 gleichzeitig mit dem Aktivieren der Konstant-Stromquelle 3 und der Konstant-Spannungsquelle 32 erfolgen kann.

Zum Zeitpunkt 38 berührt nunmehr der Schweißdraht 14 das Werkstück 17, wodurch ein Kurzschluß zwischen dem positiven Potential und dem negativen Potential über den Schweißdraht 14 geschaffen wird. Aufgrund des Kurzschlusses sinkt die Spannung der Konstant-Spannungsquelle 32 auf einen Wert 39 ab, wobei gleichzeitig mit dem Kurzschluß und dem Absinken der Spannung ein sehr schneller Stromanstieg von der Konstant-Spannungsquelle 32 geschaffen wird. Dazu ist zu erwähnen, daß durch die hohe Leerlaufspannung der Konstant-Spannungsquelle 32 ein sehr steiler Stromanstieg geschaffen wird, d.h., daß beispielsweise der Stromanstieg zwischen 1500 A/ms und 20000 A/ms betragen kann. Aufgrund des schnellen und starken Stromanstieges bildet sich im Bereich des Kurzschlusses zwischen dem Schweißdraht 14 und dem Werkstück 17 eine Lichtbogensäule bzw. der Lichtbogen 16 aus, wobei diese Lichtbogensäule, insbesondere der Lichtbogen 16 eine hohe Stromdichte und einen hohen Druck zwischen dem Schweißdrahtende und dem Werkstück 17 bewirkt.

Durch den steilen Stromanstieg im Moment der Berührung des Schweißdrahtes 14 mit dem Werkstück 17 kommt es zu einer hohen Energiedichte am Schweißdrahtende, wodurch sich eine kurze Plasmasäule mit hohem Druck unter dem angeschmolzenen Material des Schweißdrahtes 14 ausbildet. Durch das Aufschmelzen des Materials des Schweißdrahtes 14 bildet sich ein flüssiger Metalltropfen am Ende des Schweißdrahtes 14, der aufgrund der Plasmasäule leicht vom Schweißdrahtende weggedrückt werden kann. Vorteilhaft ist hierbei, daß aufgrund der hohen Energiedichte, die durch den steilen Stromanstieg erreicht wird, das Schweißdrahtende sehr schnell angeschmolzen bzw. verflüssigt wird, wobei gleichzeitig das Werkstück 17 im Bereich des sich ausbildenden Lichtbogens 16 erwärmt wird. Diese Erwärmung des Werkstückes 17 und das Anschmelzen bzw. Verflüssigen des Materials des Schweißdrahtes 14 verhindert nunmehr einen vollflächigen Kontakt des Schweißdrahtendes mit dem Werkstück 17, sodaß ein satter Kurzschluß, der nur durch einen sehr hohen Stromimpuls über eine gewisse Zeitdauer gelöst werden kann, verhindert wird und gleichzeitig eine sichere Zündung des Lichtbogens 16 gewährleistet ist.

Nach Ablauf einer gewissen Zeitdauer erreicht der Stromanstieg der Konstant-Spannungsquelle 32 seinen Maximalwert 40. Dies ist in Fig. 5 zum Zeitpunkt 41 ersichtlich. Nachdem der Strom seinen Maximalwert 40 erreicht hat, beginnt dieser wiederum zu sinken, wobei das Absinken des Stromes vom Maximalwert 40 nach einer Exponential-Funktion erfolgt.

Gleichzeitig beim Berühren des Schweißdrahtes 14 mit dem Werkstück 17, also im Kurzschlußfall zum Zeitpunkt 38, beginnt auch der Strom in der Konstant-Stromquelle 3, insbesondere vom Leistungsteil 4, zu steigen, d.h., daß zum Zeitpunkt 38 sowohl ein Stromanstieg von der Konstant-Spannungsquelle 32 und von der Konstant-Stromquelle 3 geschaffen wird. Da jedoch aufgrund der hohen Leerlaufspannung ein rascherer Stromanstieg von der Konstant-Spannungsquelle 32 erzielt wird, erfolgt die Zündung und Versorgung des Lichtbogens 16 mit Energie im ersten Moment von der Konstant-Spannungsquelle 32.

Aufgrund des Absinkens des Stromes von der Konstant-Spannungsquelle 32, nach Erreichen des Maximalwertes 40 und dem gleichzeitigen Ansteigen des Stromes von der Konstant-Stromquelle 3 wird zu einem Zeitpunkt 42 der Strom von der Konstant-Stromquelle 3 größer als der der Konstant-Spannungsquelle 32. Dies ist deshalb möglich, da der Benutzer beim Aktivieren bzw. für den Schweißprozeß einen sehr hohen Stromwert einstellt, sodaß aufgrund des Kurzschlusses zum Zeitpunkt 38 die Konstant-Stromquelle 3 den Schweißdraht 14 mit dem voreingestellten Stromwert versorgen möchte, wobei aufgrund des Absinkens des Stromes von der Konstant-Spannungsquelle 32 und dem Stromanstieg von der Konstant-Stromquelle 3 ab dem Zeitpunkt 41 eine Versorgung des Schweißdrahtes 14 über die Konstant-Stromquelle 3 geschaffen wird. Der Strom der Konstant-Stromquelle 3 steigt solange, bis dieser seinen voreingestellten Stromwert 43 erreicht, wie dies zum Zeitpunkt 44 der Fall ist. Anschließend wird nach Erreichen des Stromwertes 43 dieser von der Konstant-Stromquelle 3 konstant gehalten. Die Zeitdauer, insbesondere die Stromanstieggeschwindigkeit bis zum Erreichen des Stromwertes 43 ist abhängig von der Leerlaufspannung der Konstant-Stromquelle 3 sowie der Lichtbogenspannung und der Schweißkreisinduktivität.

Gleichzeitig mit dem Erreichen des eingestellten Stromwertes 43 wird von der Steuervorrichtung 5 die Lichtbogenspannung 45 erfaßt. Die Steuervorrichtung 5 speichert den ermittelten Wert in einem Speicher ab. Daraufhin wird von der Steuervorrichtung 5 ein im Speicher hinterlegter Soll-Wert zu der ermittelten Lichtbogenspannung 45 hinzuaddiert, wodurch ein Referenzwert 46 von der Steuervorrichtung 5 bestimmt wird. Durch das Versorgen des Schweißdrahtes 14 mit dem voreingestellten Stromwert 43 wird das Drahtende weiter angeschmolzen und es steigt die Spannung und die Lichtbogenlänge am Schweißdraht 14 weiter an. Die Steuervorrichtung 5 vergleicht den ermittelten Referenzwert 46 mit der am Schweißdraht 14 anliegenden Lichtbogenspannung 45.

Die Versorgung des Schweißdrahtes 14 mit dem voreingestellten Stromwert 43 wird von der Konstant-Stromquelle 3 solange aufrechterhalten, bis die Lichtbogenspannung 45 am Schweißdraht 14 über dem voreingestellten Referenzwert 46 liegt. Dabei ist es möglich, daß beim Überschreiten der Lichtbogenspannung 45 über den Referenzwert 46 von der Steuervorrichtung 5 ein Zeitglied gestartet wird, sodaß nach Ablauf einer voreinstellbaren Zeitdauer 47 ein neuer Steuervorgang durchgeführt wird.

Aus dem Diagramm ist ersichtlich, daß zum Zeitpunkt 48 die Spannung am Schweißdraht 14, insbesondere die Lichtbogenspannung 45 über den ermittelten Referenzwert 46 steigt, d.h., daß zum Zeitpunkt 48 von der Steuervorrichtung 5 das Zeitglied aktiviert wird, sodaß nach Ablauf der voreingestellten Zeitdauer 47, also zum Zeitpunkt 49, von der Steuervorrichtung 5 das Leistungsteil 4 derartig ausgesteuert wird, daß der Strom auf einen voreinstellbaren Minimalwert 50 abgesenkt wird, wie dies ab dem Zeitpunkt 49 ersichtlich ist. Gleichzeitig mit dem Absenken des Stromes auf den Minimalwert 50 beginnt auch die Spannung am Schweißgerät 14, aufgrund des kürzer werdenden Lichtbogens 16, zu sinken. Von der Steuervorrichtung 5 wird nunmehr der Spannungswert; insbesondere die Lichtbogenspannung 45 überwacht, sodaß durch einen laufenden Vergleich zwischen dem Ist-Wert und einem voreingestellten Minimalwert 51 die Steuervorrichtung 5 erkennen kann, daß die Spannung, insbesondere die Lichtbogenspannung 45 den Minimalwert 50 erreicht hat.

Nachdem die Spannung soweit abgesunken ist, daß sie mit dem Minimalwert 51 übereinstimmt bzw. unterhalb des Minimalwertes 51 liegt, ist der Zündprozeß zum Zünden des Lichtbogens 16 mit einer Stabilisierungsphase abgeschlossen, d.h., daß nunmehr der tatsächliche Schweißprozeß durchgeführt werden kann, wie dies ab einem Zeitpunkt 52 ersichtlich ist, d.h., daß beispielsweise bei einem Pulsschweißverfahren ab dem Zeitpunkt 52 von der Steuervorrichtung 5 der Pulsgenerator gestartet wird, wie dies durch Schweißimpulse 53, 54 in den Fig. 4 und 5 dargestellt ist. Auf die exakte Abwicklung der nachfolgenden Schweißprozesse wird nicht näher eingegangen, da nach dem Zündverfahren, welches zum Zeitpunkt 52 abgeschlossen ist, jedes beliebige zum Stand der Technik zählende Schweißverfahren durchgeführt werden kann.

Der Vorteil bei einem derartigen Zündprozeß liegt darin, daß aufgrund der hohen Leerlaufspannung, die über die zusätzliche Konstant-Spannungsquelle 32 an den Schweißdraht 14 angelegt wird, ein sehr rascher und steiler Stromanstieg am Schweißdraht 14 erreicht wird, sodaß eine sichere Zündung des Lichtbogens 16 erreicht wird. Weiters wird durch den steilen Stromanstieg verhindert, daß zwischen dem Schweißdraht 14 und dem Werkstück 17 ein satter Kurzschluß entsteht, wodurch Schweißspritzer sowie eventuell entstehende Bindefehler vermieden werden können.

Die Problematik bei einem zum Stand der Technik zählenden Verfahren liegt darin, daß es öfter zu sogenannten satten Kurzschlüssen kommen kann, bei denen der normale Stromimpuls bzw. Stromwert 43 nicht mehr ausreicht, um den Lichtbogen 16 zu zünden bzw. zu erzeugen. Dieser satte Kurzschluß kann nurmehr durch eine entsprechende Stromerhöhung bzw. andauernde Stromlieferung zum Schweißdraht 14 aufgelöst werden, wodurch der Schweißdraht 14 an einer undefinierten Stelle, die meist direkt am Kontaktrohr des Schweißbrenners 11 liegt, durchschmolzen wird. Infolge wird ein kurzes Stück des Schweißdrahtes 14 weggeschleudert, sodaß der Lichtbogen 16 vom Kontaktrohr des Schweißbrenners 11 zum Werkstück 17 gezündet wird bzw. daß bei zu großem Abstand kein Lichtbogen 16 gezündet werden kann. Durch die Ausbildung eines satten Kurzschlusses entstehen große Mengen an Schweißspritzer bzw. an Einbränden, die durch die hohen Stromimpulse zur Auflösung des satten Kurzschlusses erzeugt werden.

Bei dem erfindungsgemäßen Zündverfahren werden die satten Kurzschlüsse bei der Berührung des Schweißdrahtes 14 mit dem Werkstück 17 dadurch verhindert, daß der Stromanstieg zum Zündzeitpunkt des Lichtbogens 16, also zwischen den Zeitpunkten 38 und 41 sehr steil gemacht wird, wobei der Maximalwert 40 des Stromes begrenzt ist. Dazu wird der Konstant-Stromquelle 3, insbesondere des Leistungsteils 4, eine weitere Energiequelle, insbesondere die Konstant-Spannungsquelle 32, mit sehr hoher Leerlaufspannung und begrenztem Kurzschlußstrom parallel geschaltet.

Die parallel geschaltete Konstant-Spannungsquelle 32 weist dabei einen sehr kleinen Innenwiderstand auf. Dabei ist es möglich, daß die Konstant-Spannungsquelle 32 nur zeitlich begrenzte Energie liefert. Diese Eigenschaften für die Konstant-Spannungsquelle 32 können z.B. durch einen Kondensator mit einer bestimmten Kapazität, der auf eine bestimmte Spannung, insbesondere auf die Leerlaufspannung aufgeladen wird, erreicht werden. Damit eine vorgegebene Stromanstieggeschwindigkeit erreicht wird, muß bei gegebener Schweißkreisinduktivität L die dazu notwendige Höhe der Leerlaufspannung U_{L} nach der allgemein bekannten Formel U_{L} = L * di/dt errechnet werden. Dabei ist es beispielsweise möglich, daß der Benutzer eine entsprechende Stromanstiegsgeschwindigkeit auswählt, worauf die Steuervorrichtung 5, die entsprechende Leerlaufspannung errechnet und die Konstant-Spannungsquelle 32 auf eine entsprechende Leerlaufspannung auflädt. Damit der Kurzschlußstrom von der Konstant-Spannungsquelle 32 begrenzt werden kann, ist es möglich, daß der Widerstand des Schweißkreises verändert wird. Dies kann insofern erfolgen, indem von der Steuervorrichtung 5 ein entsprechender Widerstand in die Versorgungsleitung 18 dazugeschaltet wird.

Selbstverständlich ist es möglich, daß zur Begrenzung des Kurzschlußstromes von der Konstant-Spannungsquelle 32, wenn diese z.B. durch einen Kondensator gebildet wird, die Kapazität verändert werden kann. Dies kann z.B. automatisch über die Steuervorrichtung 5 erfolgen.

Weiters kann anstelle der in Fig. 3 gezeigten, bevorzugt konstanten Vorschubgeschwindigkeit der abschmelzenden Elektrode die Vorschubgeschwindigkeit in Abhängigkeit der Schweißparameter bzw. in Abhängigkeit der gewünschten Schweißnaht während des Schweiß- oder auch Zündprozesses verändert werden.

Das zuvor beschriebene Verfahren wird hauptsächlich aufgrund der sicherheitstechnischen Probleme der hohen Leerlaufspannung bei automatisierten Schweißungen, wie sie bei Schweißrobotern durchgeführt wird, eingesetzt, da bei den automatisierten Schweißungen entsprechende Vorkehrungen durchgeführt werden können.

Nachfolgend wird in den Fig. 6 bis 9 ein Schweißverfahren für einen Handschweißbrenner, insbesondere für den Schweißbrenner 11 beschrieben.

Dabei ist aus Fig. 6 ein vereinfachtes Blockschaltbild der Schweißstromquelle 2, insbesondere des Schweißgerätes 1 dargestellt. Bei diesem Blockschaltbild sind in der Konstant-Stromquelle 3 die einzelnen Komponenten des Leistungsteils 4 sowie die Steuervorrichtung 5 integriert, wie dies bereits in Fig. 2 beschrieben ist. Gleichzeitig ist die Konstant-Stromquelle 3 wiederum über die Versorgungsleitungen 18, 26 mit dem Schweißbrenner 11 bzw. dem Werkstück 17 verbunden. Damit eine Steuerung des Drahtvorschubgerätes 12 erfolgen kann, ist die Steuervorrichtung 5 über die Steuerleitungen 27, 28 mit dem Drahtvorschubgerät 12 verbunden. Das Drahtvorschubgerät 12 wird wiederum durch die Vorratstrommel 15 und der Fördervorrichtung 29, die durch Förderrollen 30, 31 gebildet ist, aufgebaut.

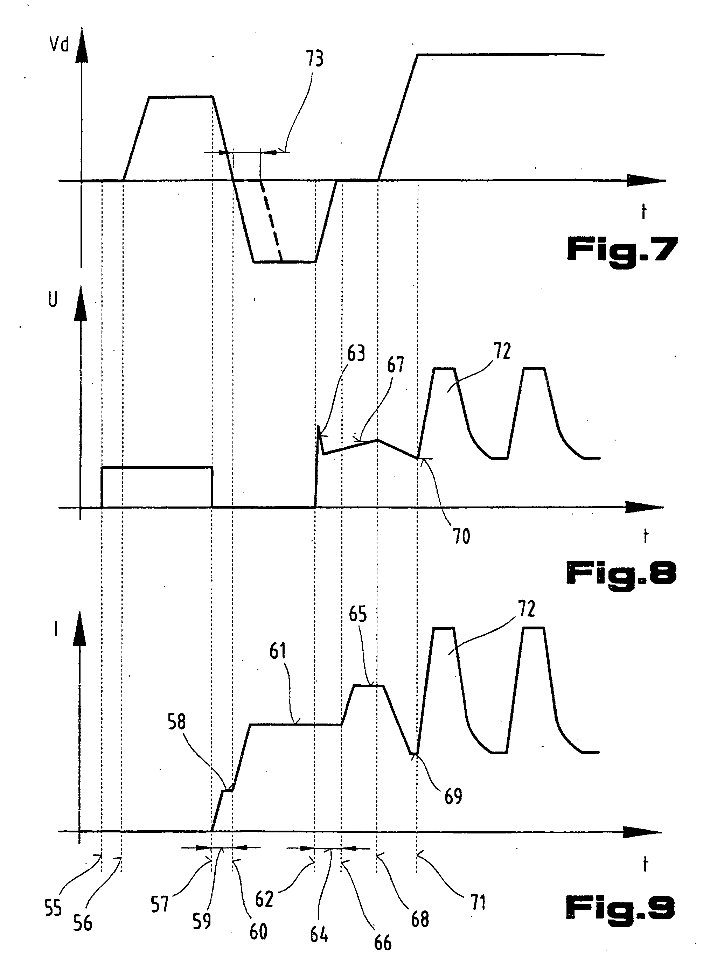

Damit nunmehr eine Zündung des Lichtbogens 16 zwischen dem Schweißdraht 14 und dem Werkstück 17 erfolgen kann, muß der nachstehend beschriebene Verfahrensablauf von der Steuervorrichtung 5 durchgeführt werden, d.h., daß entsprechend den dargestellten Kurvenverläufen der Fig. 7 bis 9 eine Steuerung der einzelnen Komponenten des Schweißgerätes 1 von der Steuervorrichtung 5 durchgeführt wird. Die Konstant-Stromquelle 3, insbesondere das Leistungsteil 4 wird bei diesem Verfahren durch eine geregelte Energiequelle gebildet.

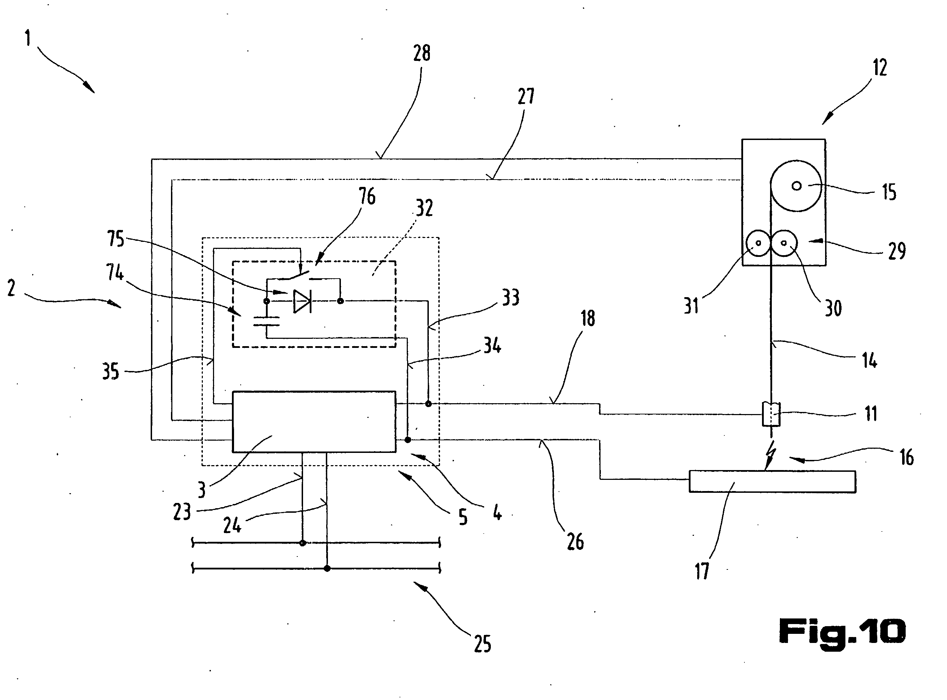

In Fig. 7 ist ein Verlauf für die Drahtvorschubgeschwindigkeit des Schweißdrahtes 14 gezeigt, wobei auf der Ordinate die Vorschubgeschwindigkeit Vd und auf der Abzisse die Zeit t aufgetragen ist. In Fig. 8 ist der Spannungsverlauf und in Fig. 9 der Stromverlauf am Schweißdraht 14 dargestellt, wobei in Fig. 8 auf der Ordinate die Spannung U und in Fig. 9 der Strom I sowie auf der Abszisse jeweils die Zeit t aufgetragen ist.

Möchte nunmehr ein Benutzer einen Schweißprozeß über den Schweißbrenner 11 starten, so kann, z.B. der Benutzer einen Taster, der am Schweißbrenner 11 angeordnet ist, betätigen, wodurch der Steuervorrichtung 5 mitgeteilt wird, daß ein Schweißprozeß durchgeführt werden soll. Das Starten des Zündverfahrens wird nach Betätigung des Tasters von der Steuervorrichtung 4 bzw. der Konstant-Stromquelle 3 selbständig durchgeführt. Nachdem der Benutzer den Taster aktiviert hat, wie dies zum Zeitpunkt 55 ersichtlich ist, wird von der Steuervorrichtung 5 das Leistungsteil 4, insbesondere die Konstant-Stromquelle 3 aktiviert, d.h., daß der Schweißdraht 14 mit Energie beaufschlagt wird. Da jedoch noch kein Stromkreis zwischen dem positiven und dem negativen Potential der Konstant-Stromquelle 3 besteht, fließt kein Strom über den Schweißdraht 14, wobei jedoch die Leerlaufspannung - die vom Benutzer frei einstellbar ist - am Schweißdraht 14 anliegt. Anschließend, also zum Zeitpunkt 56, wird von der Steuervorrichtung 5 das Drahtvorschubgerät 12 aktiviert, wodurch eine Vorwärtsbewegung des Schweißdrahtes 14 in Richtung des Werkstückes 17 durchgeführt wird. Dazu ist es z.B. möglich, daß bei Verwendung eines Handschweißbrenners der Benutzer einen bestimmten Abstand zwischen dem Werkstück 17 und dem Schweißbrenner 11 bildet. Selbstverständlich ist es möglich, daß das Starten des Drahtvorschubgerätes 12 mit dem Aktivieren des Leistungsteiles 4 bzw. der Konstant-Stromquelle 3 zusammenfallen kann.

Durch das Beaufschlagen des Drahtvorschubgerätes 12 mit einer z.B. positiven Spannung wird nunmehr der Drahtvorschub für den Schweißdraht 14 in Richtung des Werkstückes 17 aktiviert. Zu einem Zeitpunkt 57 berührt der Schweißdraht 14 das Werkstück 17, wodurch ein Kurzschluß zwischen dem Schweißdraht 14 und dem Werkstück 17 gebildet wird. Aufgrund des Kurzschlusses wird nunmehr ein Stromfluß zwischen dem positiven Potential und dem negativen Potential der Konstant-Stromquelle 3 aufgebaut, wobei die Spannung am Schweißdraht 14 zusammenbricht und gleichzeitig der Strom über den Schweißdraht 14 zu steigen beginnt. Hierzu wird der Strom von der Konstant-Stromquelle 3 bzw. vom Leistungsteil 4 auf einen voreinstellbaren Wert 58 angehoben, d.h., daß nicht, wie bei den zuvor beschriebenen Verfahren ein sehr hoher Strom an den Schweißdraht 14 angelegt wird, sondern daß der Wert 58 unterhalb des Schmelzpunktes des Schweißdrahtes 14 liegt, wodurch ein Festkleben des Schweißdrahtes 14 am Werkstück 17, was bedeuten würde, daß ein satter Kurzschluß entsteht, verhindert wird.

Gleichzeitig mit dem Entstehen des Kurzschlusses zwischen dem Schweißdraht 14 und dem Werkstück 17 wird von der Steuervorrichtung 5 ein Zeitglied aktiviert, sodaß eine voreinstellbare Zeitdauer 59 zu laufen beginnt. Weiters wird das Spannungssignal zum Drahtvorschubgerät 12 unterbrochen, sodaß die Vorwärtsbewegung des Schweißdrahtes 14 gestoppt wird.

Nach Ablauf der Zeitdauer 59, wie dies zum Zeitpunkt 60 der Fall ist, wird von der Steuervorrichtung 5 das Drahtvorschubgerät 12 derart angesteuert, daß nunmehr kein positives Spannungssignal an das Drahtvorschubgerät 12 übersandt wird, sondern ein z.B. negatives Spannungssignal, sodaß eine Umkehrung, also eine Rückwärtsbewegung des Schweißdrahtes 14 vom Drahtvorschubgerät 12 durchgeführt wird. Gleichzeitig wird von der Steuervorrichtung 5 das Leistungsteil 4, insbesondere die Konstant-Stromquelle 3 derart angesteuert, daß eine Stromwerterhöhung auf einen Wert 61 durchgeführt wird. Aufgrund der abermaligen Erhöhung des Stromes auf den Wert 61 wird der Schweißdraht 14 weiter erwärmt, wobei jedoch keine Abschmelzung des Schweißdrahtes 14 erfolgt, d.h., daß der Schweißdraht 14 aufgrund des Stromflusses nur weiter erwärmt wird, sodaß eine leichte Zündung des Lichtbogens 16 durchgeführt werden kann.

Hebt durch die Rückwärtsbewegung der Schweißdraht 14 vom Werkstück 17 ab, so wird der Kurzschluß zwischen dem Schweißdraht 14 und dem Werkstück 17 beendet, wie dies beim Zeitpunkt 62 der Fall ist. Gleichzeitig bildet sich der Lichtbogen 16 zwischen dem Werkstück 17 und dem Schweißdraht 14 aus. Durch das Ausbilden des Lichtbogens 16 entsteht am Schweißdraht 14 eine Lichtbogenspannung 63, wobei von der Steuervorrichtung 5 der Spannungsverlauf der Lichtbogenspannung 63 überwacht wird, sodaß bei Feststellung einer Lichtbogenspannung 63 von der Steuervorrichtung 5 ein Zeitglied mit voreinstellbarer Zeitdauer 64 aktiviert wird, d.h., daß durch die Ausbildung der Lichtbogenspannung 63 die Steuervorrichtung 5 erkennen kann, daß der Lichtbogen 16 gezündet wurde, sodaß über diese Zeitdauer 64 der Lichtbogen 16 mit einem konstanten Strom versorgt wird und somit ein Abreißen des Lichtbogens 16 verhindert werden kann. Gleichzeitig mit dem Abheben des Schweißdrahtes 14 vom Werkstück 17 bzw. mit der Zündung des Lichtbogens 16 wird die Rückwärtsbewegung des Schweißdrahtes 14 gestoppt bzw. kann diese auf eine geringere Geschwindigkeit reduziert werden und anschließend in eine Vorwärtsbewegung umgewandelt werden.

Nach Ablauf der voreinstellbaren Zeitdauer 64 wird der Wert 61 des Stromes auf einen weiteren höheren Wert 65 angehoben, wie dies ab dem Zeitpunkt 66 ersichtlich ist, wobei anschließend die Stromversorgung des Schweißdrahtes 14 mit diesem Wert 65 konstant gehalten, das Drahtende angeschmolzen wird und ein Anstieg der Lichtbogenspannung 63 erfolgt. Gleichzeitig wird von der Steuervorrichtung 5 die Lichtbogenspannung 63 erfaßt, sodaß beim Erreichen eines voreingestellten Soll-Wertes 67 bzw. bei Überschreiten dieses Soll-Wertes 67 über eine voreinstellbare Zeitdauer der Strom abgesenkt werden kann. Dies ist insofern notwendig, da aufgrund der Steigerung des Stromes das Material am Schweißdraht 16 abschmilzt, sodaß eine entsprechende Lichtbogenlänge zwischen dem Werkstück 17 und dem Schweißdraht 14 ausgebildet wird.

Steigt nunmehr die Lichtbogenspannung 63 über den Soll-Wert 67, wie dies zum Zeitpunkt 68 der Fall ist, so wird von der Steuervorrichtung 5 das Drahtvorschubgerät 12 mit einem positiven Potential beaufschlagt, sodaß die Vorwärtsbewegung des Schweißdrahtes 14 eingeleitet wird. Dazu wird nunmehr das Drahtvorschubgerät 12 derartig angesteuert, daß die tatsächliche Schweißdrahtgeschwindigkeit, die für den Schweißprozeß notwendig ist, eingestellt wird. Gleichzeitig mit dem Aktivieren des Drahtvorschubgerätes 12 für die Vorwärtsbewegung des Schweißdrahtes 14 wird der Strom vom Wert 65 auf einen vorgegebenen Wert 69 abgesenkt. Der Wert 69 entspricht dabei dem Minimalwert zum Versorgen des Lichtbogens 16, sodaß ein Abreißen des Lichtbogens 16 verhindert wird. Gleichzeitig wird von der Steuervorrichtung 5 die Lichtbogenspannung 63 am Schweißbrenner 11 überwacht, wodurch beim Erreichen eines Minimalwertes 70 der Lichtbogenspannung 63 die Steuervorrichtung 5 erkennen kann, daß der Zündprozeß zum Zünden des Lichtbogens 16 abgeschlossen ist, wie dies zum Zeitpunkt 71 der Fall ist.

Nachdem die Lichtbogenspannung 63 auf den Minimalwert 70 abgesunken ist, wird von der Steuervorrichtung 5 der eigentliche Schweißprozeß durchgeführt, d.h., daß beispielsweise beim Einstellen eines Pulsschweißprozesses ab dem Zeitpunkt 71 der tatsächliche Schweißprozeß beginnt und die Konstant-Stromquelle 3 bzw. die Steuervorrichtung 5 einen Pulsgenerator startet, sodaß einzelne Schweißimpulse 72 ausgesendet werden können. Selbstverständlich ist es möglich, daß nach dem Zünden des Lichtbogens 16, also beim Beenden des Zündverfahrens zum Zeitpunkt 71, jedes beliebige andere Schweißverfahren durchgeführt werden kann.

Der Vorteil eines derartigen Zündverfahrens liegt darin, daß aufgrund der stufenweisen Anhebung des Stromes an dem Schweißbrenner 11, insbesondere am Schweißdraht 14, eine kontinuierliche Erwärmung des Schweißdrahtes 14 erfolgt, sodaß Schweißspritzer sowie satte Kurzschlüsse an der Schweißstelle verhindert werden.

Weiters ist es möglich, wie strichliert in Fig. 7 dargestellt, daß zum Zeitpunkt 60, wo die Steuervorrichtung 5 die Rückwärtsbewegung des Schweißdrahtes 14 einleitet, vor der Rückwärtsbewegung und der Stromanhebung auf den Wert 61 der Schweißdraht 14 noch über eine voreinstellbare Zeitdauer 73 am Werkstück 17 positioniert bleibt, d.h., daß der Kurzschluß über diese Zeitdauer 73 aufrechterhalten wird. Dies ist deshalb vorteilhaft, da dadurch eine bessere Erwärmung des Schweißdrahtes 14 erreicht wird, wodurch eine noch sicherere Zündung des Lichtbogens 16 geschaffen werden kann.

Selbstverständlich ist es möglich, daß für die Vorwärts- und Rückwärtsbewegung des Schweißdrahtes 14 der Schweißbrenner 11 selbst entsprechend bewegt werden kann, wobei der Start des Drahtvorschubgerätes 12 erst nach Zündung des Lichtbogens 16 erfolgt, d.h., daß eine ständige Überwachung der Steuervorrichtung 5 über die Lichtbogenspannung 63 durchgeführt wird, sodaß durch die Bewegung des Schweißbrenners 11 nur eine Vorwärtsbewegung des Drahtvorschubgerätes 12 durchgeführt werden muß. Damit eine Zündung von Hand über den Schweißbrenner 11 durchgeführt werden kann, muß der Benutzer zur Zündung des Lichtbogens 16 den Schweißbrenner 11 in Richtung des Werkstückes 17 bewegen, sodaß der Schweißdraht 14 mit dem Werkstück einen Kurzschluß bildet. Anschließend hebt der Benutzer den Schweißbrenner 11 vom Werkstück 17 ab, wodurch die Zündung des Lichtbogens 16 erfolgt. Durch die Überwachung der Lichtbogenspannung 63 von der Steuervorrichtung 5 kann diese nun erkennen, daß der Lichtbogen 16 gezündet wurde, sodaß das Drahtvorschubgerät 12 aktiviert wird und eine Vorwärtsbewegung des Schweißdrahtes 14 erfolgt.

Selbstverständlich ist es möglich, daß dieses Verfahren durch einen Roboter automatisiert werden kann, d.h., daß durch Schwenken des Roboterarmes eine entsprechende Bewegung des Schweißbrenners 14 durchgeführt wird. Vorteilhaft ist hierbei, daß durch die Bewegung des Schweißbrenners 11 das Drahtvorschubgerät 12 nur für die Vorwärtsbewegung ausgelegt werden muß, sodaß Kosten bei der Herstellung für das Drahtvorschubgerät 12 eingespart werden können.

Das zuvor beschriebene Verfahren kann selbstverständlich für Schweißroboter als auch für manuelle Handschweißbrenner eingesetzt werden.

Fig. 10 zeigt ein anderes Ausführungsbeispiel der Schweißstromquelle 2 mit der Konstant-Stromquelle 3 und der Konstant-Spannungsquelle 32, wobei hierbei die Konstant-Spannungsquelle 32 vom Ausgang der Konstant-Stromquelle 3 gespeist wird. Es wird also die Konstant-Stromquelle 3 gleichzeitig dazu verwendet, um die Konstant-Spannungsquelle 32, insbesondere gebildet durch einen Kondensator 74 aufzuladen. Eine Serienschaltung des Kondensators 74 mit einer Diode 75 ist dabei derart mit dem Ausgang der Konstant-Stromquelle 3 bzw. mit den Versorgungsleitungen 18, 26 verbunden, daß die Kathode der Diode 75 mit dem positiven Potential, demgemäß mit der Versorgungsleitung 18 verbunden ist und der verbleibende Anschluß des Kondensators 74 mit dem negativen Potential, beispielsgemäß mit der Versorgungsleitung 26 verbunden ist. Der Diode 75 ist ein Schalter 76 parallel geschaltet, dessen Steuereingang über die Steuerleitung 35 mit der Konstant-Stromquelle 3 oder auch mit der Steuervorrichtung 5 verbunden ist, um in den leitenden und sperrenden Zustand versetzt werden zu können.

Mittels dem Ausgang der Konstant-Stromquelle 3 wird also die Konstant-Spannungsquelle 32, insbesondere der Kondensator 74 aufgeladen. Die Diode 75 dient der Entkopplung des Schweißstromkreises während der Schweißung.

Die Konstant-Stromquelle 3 ist aufgrund ihrer Auslegung bzw. ihres Leistungsteilkonzeptes in der Lage, nach dem Startbefehl eine entsprechend hohe Leerlaufspannung zu liefern, sodaß über den von der Konstant-Stromquelle 3 oder auch von der Steuervorrichtung 5 gesteuerten, in der Startphase leitenden Schalter 76 der Kondensator 74 auf eine entsprechend hohe Spannung, von beispielsweise 200 V aufgeladen wird. Nachdem der bevorzugt voreinstellbare Spannungswert am Kondensator 74 erreicht ist, wird der Schalter 76 geöffnet bzw. in den Sperrzustand versetzt und die Leerlaufspannung der Konstant-Stromquelle 3 auf einen den Sicherheitsvorschriften entsprechenden Wert abgesenkt und nachfolgend das Drahtvorschubgerät 12 aktiviert. Tritt innerhalb einer bestimmten, relativ kurzen Zeitspanne, beispielsweise von 300 ms nach dem Start der Konstant-Stromquelle 3 keine Berührung des dem Werkstück 17 zugeordneten Endes des Schweißdraht 14 mit dem Werkstück 17 auf, so wird der Schalter 76 abermals geschlossen und die Spannung des Kondensators 74 auf einen den Sicherheitsvorschriften entsprechenden Wert abgesenkt.

Berührt innerhalb von beispielsweise 300 ms das Schweißdrahtende das Werkstück 17, so wird durch die Konstant-Spannungsquelle 32 bzw. den Kondensator 74 ebenso ein steiler Stromanstieg auf den Maximalwert 40 - Fig. 5 - erzielt, worauf nach Erreichen dieses Maximalwertes 40 der von der Konstant-Spannungsquelle 32, insbesondere dem Kondensator 74 abgegebene Strom absinkt und der Lichtbogen 16 durch den ansteigenden Strom von der Konstant-Stromquelle 3 aufrecht erhalten wird.

Es kann also festgehalten werden, daß die Konstant-Spannungsquelle 32, wenn diese parallel mit der Konstant-Stromquelle 3 geschaltet ist, keine eigene Ladeschaltung besitzen muß, und in der Startphase der Konstant-Stromquelle 3 vom Ausgang der Konstant-Stromquelle 3 selbst auf einen entsprechenden hohen Spannungswert aufgeladen wird.

Unabhängig von der zuvor beschriebenen Parallelschaltung der Konstant-Stromquelle 3 und der Konstant-Spannungsquelle 32 ist es selbstverständlich auch möglich, die Konstant-Spannungsquelle 32 mit der Konstant-Stromquelle 3 in Serie zu schalten. Hierzu ist die Konstant-Spannungsquelle 32 in eine der Versorgungsleitungen 18 oder 26 am Ausgang der Konstant-Stromquelle 3 zu schalten. Die Konstant-Spannungsquelle 32 besitzt dabei eine eigene Ladeschaltung und wird insbesondere während der Startphase der Konstant-Stromquelle 3 über die Steuerleitung 35 in den Zustand für Energieaufnahme bzw. Ladungserhalt versetzt. Diese Versorgung der Konstant-Spannungsquelle 32 mit der im Vergleich während des eingeleiteten Schweißprozesses relativ hohen Spannung von über 100 V erfolgt noch bevor der Schweißstromkreis geschlossen wird, also noch bevor die Elektrode, beispielsweise der Schweißdraht 14 das Werkstück 17 kontaktiert. Nachdem aus der Konstant-Spannungsquelle 32 der verhältnismäßig hohe Spannungswert von über 100 V verfügbar ist, kann der Schweißstromkreis, zum Beispiel durch Aktivieren des Drahtvorschubgerätes 12 geschlossen werden, wodurch beim erstmaligen Berühren der Elektrode mit dem Werkstück 17 sowohl die elektrische Energie der Konstant-Stromquelle 3 als auch die elektrische Energie der Konstant-Spannungsquelle 32 zur Verfügung steht und letztere beim erstmaligen Kontakt mit dem Werkstück 17 den steilen Stromanstieg auf den bevorzugt voreinstellbaren Maximalwert 40 - Fig. 5 - bewirkt.

Es kann also festgehalten werden, daß die Konstant-Spannungsquelle 32, wenn diese in Serie mit der Konstant-Stromquelle 3 geschaltet ist, eine eigene Ladeschaltung umfaßt und in der Startphase der Konstant-Stromquelle 3 über die Steuerleitung 35 die Ladeschaltung aktiviert wird und der Kondensator 74 aufgeladen wird.

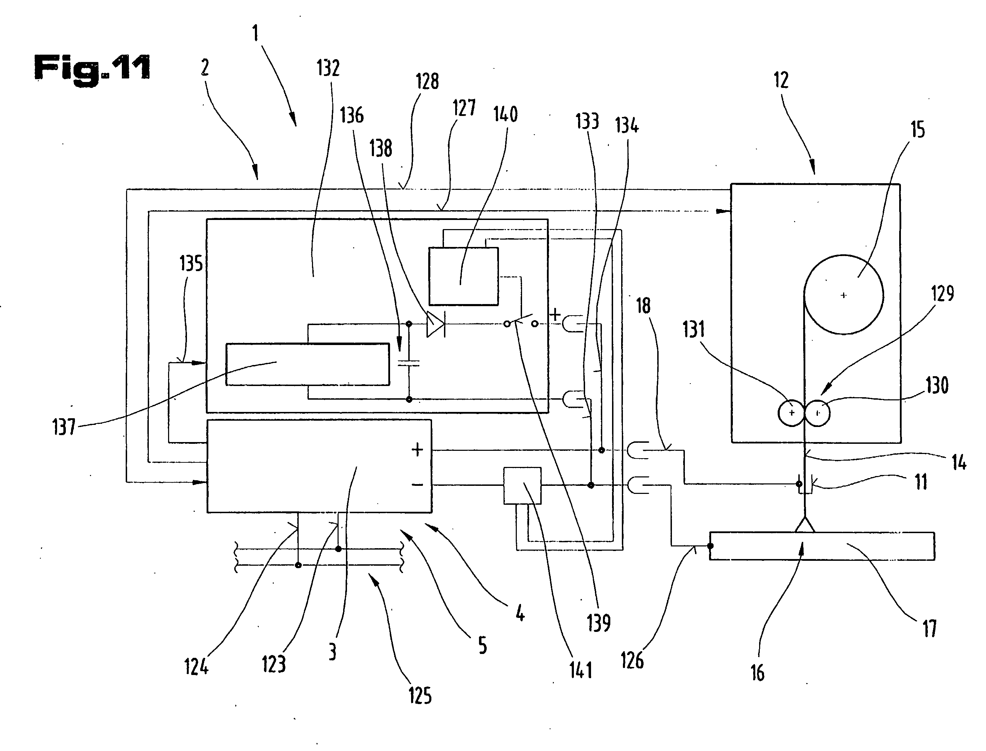

In den Fig. 11 bis 14 ist ein Verfahrensablauf zum Zünden des Lichtbogens 16 zwischen dem Werkstück 17 und einer abzuschmelzenden Elektrode, insbesondere dem Schweißdraht 14, gezeigt, wobei in Fig. 11 ein vereinfachtes Blockschaltbild der Schweißstromquelle 2, insbesondere des Schweißgerätes 1, dargestellt ist. Bei diesem Blockschaltbild sind in der Konstant-Stromquelle 3 die Komponenten des Leistungsteil 4 und der Steuervorrichtung 5, wie sie in Fig. 1 beschrieben sind, integriert.

Bei dem dargestellten Blockschaltbild sind die weiteren in Fig. 1 beschriebenen Komponenten mit der Konstant-Stromquelle 3 leitungsverbunden, sodaß eine Aktivierung, beispielsweise der Kühlung, durch die Konstant-Stromquelle 3, insbesondere der Steuervorrichtung 5, möglich ist. In Fig. 11 sind nur die für das Zünden des Lichtbogens 16 notwendigen Komponenten dargestellt. Dazu ist die Konstant-Stromquelle 3 über Versorgungsleitungen 123, 124 mit einem Spannungsversorgungsnetz 125 verbunden, sodaß die einzelnen Komponenten des Schweißgeräts 1 mit Strom und Spannung versorgt werden können.

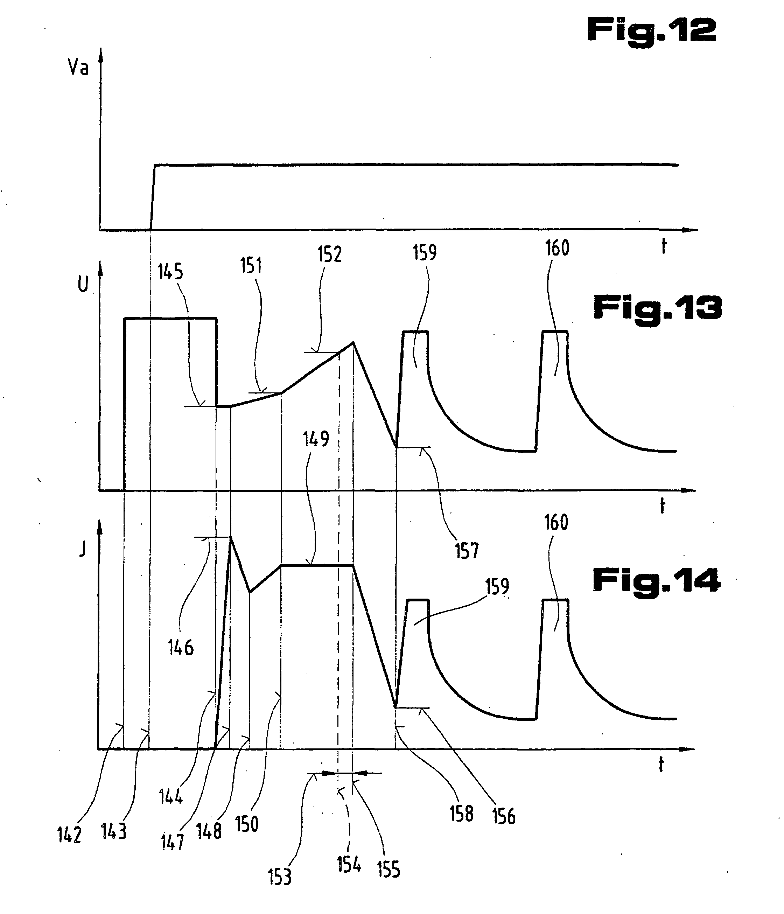

In den Fig. 12 bis 14 sind in Form von Diagrammen Verfahrensabläufe dargestellt, wobei in den Fig. 13 und 14 auf der Ordinate die Spannung U bzw. der Strom I sowie auf der Abszisse die Zeit t aufgetragen sind.

Bei dem dargestellten Blockschaltbild in Fig. 11 ist die Konstant-Stromquelle 3 über die Versorgungsleitung 18 mit dem schematisch dargestellten Schweißbrenner 11 verbunden, wogegen das Werkstück 17 über eine weitere Versorgungsleitung 126 mit der Konstant-Stromquelle 3 verbunden ist. Bei dem dargestellten Ausführungsbeispiel wird der Schweißbrenner 11 über die Versorgungsleitung 18 mit dem positiven Potential versorgt, wogegen das negative Potential über die Versorgungsleitung 126 am Werkstück 17 angelegt ist. Gleichzeitig weist die Konstant-Stromquelle 3 Steuerleitungen 127, 128 auf, die mit dem Drahtvorschubgerät 12 verbunden sind. Bei dem Drahtvorschubgerät 12 sind die Vorratstrommel 15 sowie eine Fördervorrichtung 129 zum Befördern des Schweißdrahtes 14 an den Schweißbrenner 11 dargestellt. Die Fördervorrichtung 129 kann aus zwei Förderrollen 130, 131 gebildet werden, wobei zumindest eine der beiden Förderrollen 130, 131 über einen nicht dargestellten Motor angetrieben wird.

Weiters ist in Fig. 11 eine zusätzliche Konstant-Spannungsquelle 132 parallel zur Konstant-Stromquelle 3 geschaltet, d.h., daß die Ausgänge der Konstant-Spannungsquelle 132 über Leitungen 133, 134 mit den Versorgungsleitungen 18, 126 bzw. den Ausgängen der Konstant-Stromquelle 3 verbunden sind. Dabei ist das positive Potential der Konstant-Spannungsquelle 132 wiederum mit dem positiven Potential der Konstant-Stromquelle 3 zusammengeschaltet. Damit die Konstant-Spannungsquelle 132 von der Steuervorrichtung 5 angesteuert werden kann, ist eine Steuerleitung 135 zwischen der Steuervorrichtung 5, insbesondere der Konstant-Stromquelle 3 und der Konstant-Spannungsquelle 132 dargestellt.

Die Konstant-Spannungsquelle 132 ist derartig ausgebildet, daß sie den Schweißbrenner 11 mit einer sehr hohen Leerlaufspannung, beispielsweise zwischen 200 V und 500 V, versorgt. Die Konstant-Stromquelle 3 versorgt den Schweißbrenner 11 mit dem Schweißstrom, der beispielsweise zwischen 20 A und 500 A liegen kann. Es kann nunmehr gesagt werden, daß die zusätzlich angeordnete und parallel geschaltete Konstant-Spannungsquelle 132 für das Zünden des Lichtbogens 16 verwendet wird, wobei bei einem Schweißprozeß nach dem Zünden des Lichtbogens 16 die Konstant-Spannungsquelle 132 deaktiviert ist und der Schweißprozeß von der Konstant-Stromquelle 3 mit Energie versorgt wird.

Zur Zündung des Lichtbogens 16 wird die Energie der Konstant-Spannungsquelle 132 der Energie der Konstant-Stromquelle 3 überlagert. Die Energie der Konstant-Spannungsquelle 132 wird in Abhängigkeit eines voreinstellbaren Stromwertes und/oder Stromanstieges der Konstant-Stromquelle 3 zugeschaltet. Die Konstant-Spannungsquelle 132 besteht aus einem Energiespeicher, insbesondere einem Kondensator 136, der über eine Aufladevorrichtung 137 auf einen voreinstellbaren Spannungswert aufladbar ist. In Serie zum Kondensator 136 ist eine Diode 138 sowie ein elektronischer Schalter 139 geschaltet. Die Serienschaltung des Kondensators 136 mit der Diode 138 ist dabei derart mit dem Ausgang der Konstant-Stromquelle 3 bzw. mit den Versorgungsleitungen 18, 126 verbunden, daß die Kathode der Diode 138 mit dem positiven Potential, demgemäß mit der Versorgungsleitung 18, verbunden ist und der verbleibende Anschluß des Kondensators 136 mit dem negativen Potential, beispielsgemäß mit der Versorgungsleitung 126, verbunden ist.

Der elektronische Schalter 139 ist über eine Steuereinrichtung 140 ansteuerbar, wobei die Steuereinrichtung 140 über einen Signalgeber, beispielsweise einen Stromwandler 141, aktivierbar ist. Der Stromwandler 141 ist im Stromkreis der Konstant-Stromquelle 3 zum Schweißbrenner 11 bzw. zum Werkstück 17 angeordnet. Zum Zünden des Lichtbogens 16 berührt der Schweißbrenner 11 bzw. der Schweißdraht 14 das Werkstück 17, wodurch der Stromkreis geschlossen wird und ein Strom von der Konstant-Stromquelle 3 über die Versorgungsleitungen 18, 126 fließt. Der Stromwandler 141 reagiert auf diesen Strom bzw. auf diesen Stromanstieg und aktiviert die Steuereinrichtung 140, die wiederum den elektronischen Schalter 139 schließt und die Energie der Konstant-Spannungsquelle 132 der Energie der Konstant-Stromquelle 3 überlagert, und somit steht zum Zünden des Lichtbogens 16 eine hohe Leerlaufspannung zur Verfügung.

Bei den Diagrammen, wie sie in den Fig. 12 bis 14 dargestellt sind, ist ein Kurvenverlauf für die Drahtvorschubgeschwindigkeit des Drahtvorschubgerätes 12 - Fig. 12 - und ein Spannungsverlauf - Fig. 13 - sowie Stromverlauf - Fig. 14 - an der abzuschmelzenden Elektrode, insbesondere am Schweißdraht 14 dargestellt.

Möchte nunmehr ein Benutzer einen Schweißprozeß durchführen, so muß zuerst der Lichtbogen 16 gezündet werden. Dazu aktiviert der Benutzer das Schweißgerät 1, sodaß alle Komponenten des Schweißgerätes 1, wie sie in Fig. 1 beschrieben sind, mit Strom und Spannung versorgt werden. Nachdem der Benutzer über die Ein- und/oder Ausgabevorrichtung 22 alle Einstellungen für einen Schweißprozeß vorgenommen hat, kann der Benutzer beispielsweise durch Aktivieren eines Tasters, der beispielsweise am Schweißbrenner 11 angeordnet ist, den Schweißprozeß starten.

Nach dem Starten des Schweißprozesses wird von der Steuervorrichtung 5 die Konstant-Stromquelle 3, insbesondere das Leistungsteil 4 und die Aufladevorrichtung 137, für die Konstant-Spannungsquelle 132 aktiviert, d.h., daß die Konstant-Stromquelle 3 vorerst den Schweißbrenner 11 mit Energie versorgt. Am Schweißbrenner 11 wird die Energie an den Schweißdraht 14 übergeben. Das Starten des Schweißprozesses ist aus den Diagrammen der Fig. 12 bis 14 zu einem Zeitpunkt 142 dargestellt. Wie nun aus den beiden Kurvenverläufen der Fig. 13 und 14 zu ersehen ist, wird der Schweißdraht 14 von der Konstant-Stromquelle 3 mit der Leerlaufspannung versorgt.

Nachdem die Konstant-Stromquelle 3 aktiviert wurde, wird zu einem weiteren Zeitpunkt 143 von der Steuervorrichtung 5 das Drahtvorschubgerät 12 aktiviert, sodaß der Schweißdraht 14 von der Vorratstrommel 15 über die Fördervorrichtung 129 in Richtung des Schweißbrenners 11 und somit zum Werkstück 17 bewegt wird. Selbstverständlich ist es möglich, daß das Aktivieren des Drahtvorschubgerätes 12 gleichzeitig mit dem Aktivieren der Konstant-Stromquelle 3 erfolgen kann.

Zu einem Zeitpunkt 144 berührt nunmehr der Schweißdraht 14 das Werkstück 17, wodurch ein Kurzschluß zwischen dem positiven Potential und dem negativen Potential über den Schweißdraht 14 geschaffen wird. In den Versorgungsleitungen 18, 126 fließt ein Strom, worauf der Stromwandler 141 die Steuereinrichtung 140 aktiviert, die wiederum den elektronischen Schalter 139 schließt. Aufgrund des Kurzschlusses sinkt die Spannung der Konstant-Stromquelle 3 auf einen Wert 145 ab, wobei gleichzeitig mit dem Kurzschluß und dem Absinken der Spannung ein sehr schneller Stromanstieg von der Konstant-Spannungsquelle 132 geschaffen wird. Dazu ist zu erwähnen, daß durch die hohe Leerlaufspannung der Konstant-Spannungsquelle 132 ein sehr steiler Stromanstieg geschaffen wird, d.h., daß beispielsweise der Stromanstieg zwischen 1500 A/ms und 20000 A/ms betragen kann. Aufgrund des schnellen und starken Stromanstieges bildet sich im Bereich des Kurzschlusses zwischen dem Schweißdraht 14 und dem Werkstück 17 eine Lichtbogensäule bzw. der Lichtbogen 16 aus, wobei diese Lichtbogensäule, insbesondere der Lichtbogen 16, eine hohe Stromdichte und einen hohen Druck zwischen dem Schweißdrahtende und dem Werkstück 17 bewirkt.

Durch den steilen Stromanstieg im Moment der Berührung des Schweißdrahtes 14 mit dem Werkstück 17 kommt es zu einer hohen Energiedichte am Schweißdrahtende, wodurch sich eine kurze Plasmasäule mit hohem Druck unter dem angeschmolzenen Material des Schweißdrahtes 14 ausbildet. Durch das Aufschmelzen des Materials des Schweißdrahtes 14 bildet sich ein flüssiger Metalltropfen am Ende des Schweißdrahtes 14, der aufgrund der Plasmasäule leicht vom Schweißdrahtende weggedrückt werden kann. Vorteilhaft ist hierbei, daß aufgrund der hohen Energiedichte, die durch den steilen Stromanstieg erreicht wird, das Schweißdrahtende sehr schnell angeschmolzen bzw. verflüssigt wird, wobei gleichzeitig das Werkstück 17 im Bereich des sich ausbildenden Lichtbogens 16 erwärmt wird. Diese Erwärmung des Werkstückes 17 und das Anschmelzen bzw. Verflüssigen des Materials des Schweißdrahtes 14 verhindert nunmehr einen vollflächigen Kontakt des Schweißdrahtendes mit dem Werkstück 17, sodaß ein satter Kurzschluß, der nur durch einen sehr hohen Stromimpuls über eine gewisse Zeitdauer gelöst werden kann, verhindert wird und gleichzeitig eine sichere Zündung des Lichtbogens 16 gewährleistet ist.

Nach Ablauf einer gewissen Zeitdauer erreicht der Stromanstieg der Konstant-Spannungsquelle 132 einen Maximalwert 146. Dies ist in Fig. 14 zu einem Zeitpunkt 147 ersichtlich. Nachdem der Strom seinen Maximalwert 146 erreicht hat, beginnt dieser wiederum zu sinken, wobei das Absinken des Stromes vom Maximalwert 146 nach einer Exponential-Funktion erfolgt.

Gleichzeitig beim Berühren des Schweißdrahtes 14 mit dem Werkstück 17, also im Kurzschlußfall zum Zeitpunkt 144, beginnt auch der Strom in der Konstant-Stromquelle 3, insbesondere vom Leistungsteil 4, zu steigen, d.h., daß zum Zeitpunkt 144 sowohl ein Stromanstieg von der Konstant-Spannungsquelle 132 und von der Konstant-Stromquelle 3 geschaffen wird. Da jedoch aufgrund der hohen Leerlaufspannung ein rascherer Stromanstieg von der Konstant-Spannungsquelle 132 erzielt wird, erfolgt die Zündung und Versorgung des Lichtbogens 16 mit Energie im ersten Moment von der Konstant-Spannungsquelle 132.

Aufgrund des Absinkens des Stromes von der Konstant-Spannungsquelle 132 nach Erreichen des Maximalwertes 146 und dem gleichzeitigen Ansteigen des Stromes von der Konstant-Stromquelle 3 wird zu einem Zeitpunkt 148 der Strom von der Konstant-Stromquelle 3 größer als der der Konstant-Spannungsquelle 132. Dies ist deshalb möglich, da der Benutzer beim Aktivieren bzw. für den Schweißprozeß einen entsprechenden Stromwert einstellt, sodaß aufgrund des Kurzschlusses zum Zeitpunkt 144 die Konstant-Stromquelle 3 den Schweißdraht 14 mit dem voreingestellten Stromwert versorgen möchte, sodaß aufgrund des Absinkens des Stromes von der Konstant-Spannungsquelle 132 und dem Stromanstieg von der Konstant-Stromquelle 3, beispielsweise ab dem Zeitpunkt 147, eine Versorgung des Schweißdrahtes 14 über die Konstant-Stromquelle 3 geschaffen wird. Der Strom der Konstant-Stromquelle 3 steigt solange, bis dieser einen voreingestellten Stromwert 149 erreicht, wie dies zu einem Zeitpunkt 150 der Fall ist. Anschließend wird nach Erreichen des Stromwertes 149 dieser von der Konstant-Stromquelle 3 konstant gehalten. Die Zeitdauer, insbesondere die Stromanstieggeschwindigkeit bis zum Erreichen des Stromwertes 149 ist abhängig von der Leerlaufspannung der Konstant-Stromquelle 3 sowie einer Lichtbogenspannung 151 und der Schweißkreisinduktivität.

Gleichzeitig mit dem Erreichen des eingestellten Stromwertes 149 wird von der Steuervorrichtung 5 die Lichtbogenspannung 151 erfaßt. Die Steuervorrichtung 5 speichert den ermittelten Wert in einem Speicher ab. Daraufhin wird von der Steuervorrichtung 5 ein im Speicher hinterlegter Soll-Wert zu der ermittelten Lichtbogenspannung 151 hinzuaddiert, wodurch ein Referenzwert 152 von der Steuervorrichtung 5 bestimmt wird. Durch das Versorgen des Schweißdrahtes 14 mit dem voreingestellten Stromwert 149 wird das Drahtende weiter angeschmolzen und es steigt die Spannung und die Lichtbogenlänge am Schweißdraht 14 weiter an. Die Steuervorrichtung 5 vergleicht den ermittelten Referenzwert 152 mit der am Schweißdraht 14 anliegenden Lichtbogenspannung 151.

Die Versorgung des Schweißdrahtes 14 mit dem voreingestellten Stromwert 149 wird von der Konstant-Stromquelle 3 solange aufrechterhalten, bis die Lichtbogenspannung 151 am Schweißdraht 14 über dem voreingestellten Referenzwert 152 liegt. Dabei ist es möglich, daß beim Überschreiten der Lichtbogenspannung 151 über den Referenzwert 152 von der Steuervorrichtung 5 ein Zeitglied gestartet wird, sodaß nach Ablauf einer voreinstellbaren Zeitdauer 153 ein neuer Steuervorgang durchgeführt wird.

Aus dem Diagramm ist ersichtlich, daß zu einem Zeitpunkt 154 die Spannung am Schweißdraht 14, insbesondere die Lichtbogenspannung 151, über den ermittelten Referenzwert 152 steigt, d.h., daß zum Zeitpunkt 154 von der Steuervorrichtung 5 das Zeitglied aktiviert wird, sodaß nach Ablauf der voreingestellten Zeitdauer 153, also zu einem Zeitpunkt 155, von der Steuervorrichtung 5 das Leistungsteil 4 derartig ausgesteuert wird, daß der Strom auf einen voreinstellbaren Minimalwert 156 abgesenkt wird, wie dies ab dem Zeitpunkt 155 ersichtlich ist. Gleichzeitig mit dem Absenken des Stromes auf den Minimalwert 156 beginnt auch die Spannung am Schweißgerät 1, aufgrund des kürzer werdenden Lichtbogens 16, zu sinken. Von der Steuervorrichtung 5 wird nunmehr der Spannungswert, insbesondere die Lichtbogenspannung 151, überwacht, sodaß durch einen laufenden Vergleich zwischen dem Ist-Wert und einem voreingestellten Minimalwert 157 die Steuervorrichtung 5 erkennen kann, daß die Spannung, insbesondere die Lichtbogenspannung 151, den Minimalwert 157 erreicht hat. Selbstverständlich ist es möglich, daß das Einleiten des Absenkens des Stromes auf den Minimalwert 156 direkt nach dem Erreichen des Referenzwertes 152 möglich ist.

Nachdem die Spannung soweit abgesunken ist, daß sie mit dem Minimalwert 157 übereinstimmt bzw. unterhalb des Minimalwertes 157 liegt, ist der Zündprozeß zum Zünden des Lichtbogens 16 mit einer Stabilisierungsphase abgeschlossen, d.h., daß nunmehr der tatsächliche Schweißprozeß durchgeführt werden kann, wie dies ab einem Zeitpunkt 158 ersichtlich ist, d.h., daß beispielsweise bei einem Pulsschweißverfahren ab dem Zeitpunkt 158 von der Steuervorrichtung 5 der Pulsgenerator gestartet wird, wie dies durch Schweißimpulse 159, 160 in den Fig. 13 und 14 dargestellt ist. Auf die exakte Abwicklung der nachfolgenden Schweißprozesse wird nicht näher eingegangen, da nach dem Zündverfahren, welches zum Zeitpunkt 158 abgeschlossen ist, jedes beliebige zum Stand der Technik zählende Schweißverfahren durchgeführt werden kann.

Der Vorteil bei einem derartigen Zündprozeß liegt darin, daß aufgrund der hohen Leerlaufspannung, die nur kurzzeitig über die zusätzliche Konstant-Spannungsquelle 132 an den Schweißdraht 14 angelegt wird, ein sehr rascher und steiler Stromanstieg am Schweißdraht 14 erreicht wird, sodaß eine sichere Zündung des Lichtbogens 16 erreicht wird. Weiters wird durch den steilen Stromanstieg verhindert, daß zwischen dem Schweißdraht 14 und dem Werkstück 17 ein satter Kurzschluß entsteht, wodurch Schweißspritzer sowie eventuell entstehende Bindefehler vermieden werden können. Darüber hinaus liegt die hohe Leerlaufspannung nicht vor dem Berühren des Schweißdrahtes 14 mit dem Werkstück 17 an den Schweißbuchsen an.

Die Problematik bei einem zum Stand der Technik zählenden Verfahren liegt darin, daß es öfter zu sogenannten satten Kurzschlüssen kommen kann, bei denen der normale Stromimpuls bzw. Stromwert 149 nicht mehr ausreicht, um den Lichtbogen 16 zu zünden bzw. zu erzeugen. Dieser satte Kurzschluß kann nur mehr durch eine entsprechende Stromerhöhung bzw. andauernde Stromlieferung zum Schweißdraht 14 aufgelöst werden, wodurch der Schweißdraht 14 an einer undefinierten Stelle, die meist direkt am Kontaktrohr des Schweißbrenners 11 liegt, durchschmolzen wird. Infolge wird ein kurzes Stück des Schweißdrahtes 14 weggeschleudert, sodaß der Lichtbogen 16 vom Kontaktrohr des Schweißbrenners 11 zum Werkstück 17 gezündet wird bzw. daß bei zu großem Abstand kein Lichtbogen 16 gezündet werden kann. Durch die Ausbildung eines satten Kurzschlusses entstehen große Mengen an Schweißspritzern bzw. an Einbränden, die durch die hohen Stromimpulse zur Auflösung des satten Kurzschlusses erzeugt werden.

Bei dem erfindungsgemäßen Zündverfahren werden die satten Kurzschlüsse bei der Berührung des Schweißdrahtes 14 mit dem Werkstück 17 dadurch verhindert, daß der Stromanstieg zum Zündzeitpunkt des Lichtbogens 16, also zwischen den Zeitpunkten 144 und 147, sehr steil gemacht wird, wobei der Maximalwert 146 des Stromes begrenzt ist. Dazu wird der Konstant-Stromquelle 3, insbesondere des Leistungsteils 4, eine weitere Energiequelle, insbesondere die Konstant-Spannungsquelle 132, mit sehr hoher Leerlaufspannung und begrenztem Kurzschlußstrom parallel geschaltet.

Die parallel geschaltete Konstant-Spannungsquelle 132 weist dabei einen sehr kleinen Innenwiderstand auf. Dabei ist es möglich, daß die Konstant-Spannungsquelle 132 nur zeitlich begrenzte Energie liefert. Diese Eigenschaften für die Konstant-Spannungsquelle 132 können z.B. durch einen Kondensator 136 mit einer bestimmten Kapazität, der auf eine bestimmte Spannung, insbesondere auf die Leerlaufspannung, aufgeladen wird, erreicht werden. Damit eine vorgegebene Stromanstiegsgeschwindigkeit erreicht wird, muß bei gegebener Schweißkreisinduktivität L die dazu notwendige Höhe der Leerlaufspannung UL nach der allgemein bekannten Formel UL = L * di/dt errechnet werden. Dabei ist es beispielsweise möglich, daß der Benutzer eine entsprechende Stromanstiegsgeschwindigkeit auswählt, worauf die Steuervorrichtung 5 die entsprechende Leerlaufspannung errechnet und die Konstant-Spannungsquelle 132 auf eine entsprechende Leerlaufspannung auflädt. Damit der Kurzschlußstrom von der Konstant-Spannungsquelle 132 begrenzt werden kann, ist es möglich, daß der Widerstand des Schweißkreises verändert wird. Dies kann insofern erfolgen, indem von der Steuervorrichtung 5 ein entsprechender Widerstand in die Versorgungsleitung 18 dazugeschaltet wird.

Selbstverständlich ist es möglich, daß zur Begrenzung des Kurzschlußstromes von der Konstant-Spannungsquelle 132, wenn diese z.B. durch einen Kondensator 136 gebildet wird, die Kapazität verändert werden kann. Dies kann z.B. automatisch über die Steuervorrichtung 5 erfolgen.

Weiters kann anstelle der in Fig. 12 gezeigten, bevorzugt konstanten Vorschubgeschwindigkeit der abzuschmelzenden Elektrode die Vorschubgeschwindigkeit in Abhängigkeit der Schweißparameter bzw. in Abhängigkeit der gewünschten Schweißnaht während des Schweiß- oder auch Zündprozesses verändert werden.

Das zuvor beschriebene Verfahren wird hauptsächlich aufgrund der sicherheitstechnischen Probleme der hohen Leerlaufspannung bei automatisierten Schweißungen, wie sie bei Schweißrobotern durchgeführt werden, eingesetzt, da bei den automatisierten Schweißungen entsprechende Vorkehrungen durchgeführt werden können.

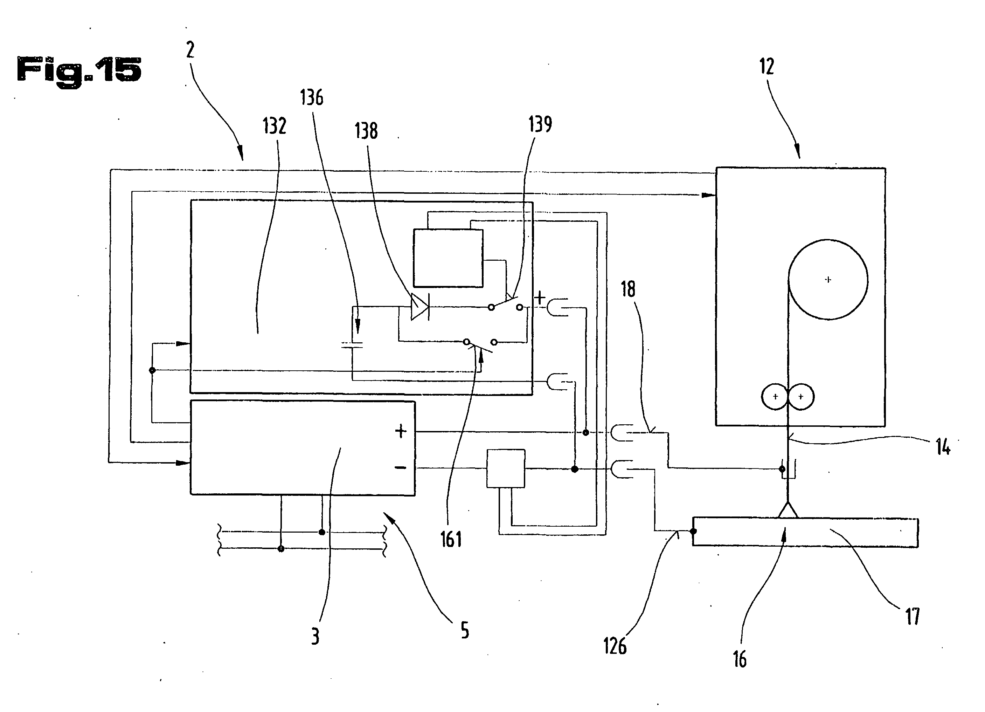

Fig. 15 zeigt ein anderes Ausführungsbeispiel der Schweißstromquelle 2 mit der Konstant-Stromquelle 3 und der Konstant-Spannungsquelle 132, wobei hierbei die Konstant-Spannungsquelle 132 vom Ausgang der Konstant-Stromquelle 3 gespeist wird.

Es wird also die Konstant-Stromquelle 3 gleichzeitig dazu verwendet, um die Konstant-Spannungsquelle 132, die beispielsweise wiederum durch den Kondensator 136 gebildet ist, aufzuladen. Eine Serienschaltung des Kondensators 136 mit der Diode 138 und dem elektronischen Schalter 139 ist dabei derart mit dem Ausgang der Konstant-Stromquelle 3 bzw. mit den Versorgungsleitungen 18, 126 verbunden, daß die Kathode der Diode 138 mit dem positiven Potential, demgemäß mit der Versorgungsleitung 18, verbunden ist und der verbleibende Anschluß des Kondensators 136 mit dem negativen Potential, beispielsgemäß mit der Versorgungsleitung 126, verbunden ist. Der Serienschaltung von der Diode 138 mit dem elektronischen Schalter 139 ist ein Schalter 161 parallel geschaltet, dessen Steuereingang über eine Steuerleitung 162 mit der Konstant-Stromquelle 3 oder auch mit der Steuervorrichtung 5 verbunden ist, wodurch die Serienschaltung der Diode 138 und des Schalters 139 überbrückt werden kann.

Mittels dem Ausgang der Konstant-Stromquelle 3 wird also die Konstant-Spannungsquelle 132, insbesondere der Kondensator 136, aufgeladen. Die Diode 138 dient der Entkopplung des Schweißstromkreises während der Schweißung. Die Konstant-Stromquelle 3 ist aufgrund ihrer Auslegung bzw. ihres Leistungsteilkonzeptes in der Lage, nach dem Startbefehl eine entsprechend hohe Leerlaufspannung zu liefern, sodaß über den von der Konstant-Stromquelle 3 oder auch von der Steuervorrichtung 5 gesteuerten, in der Startphase leitenden Schalter 161 der Kondensator 136 auf eine entsprechend hohe Spannung von beispielsweise 200 V aufgeladen wird. Nachdem der bevorzugt voreinstellbare Spannungswert am Kondensator 136 erreicht ist, wird der Schalter 161 geöffnet bzw. in den Sperrzustand versetzt und die Leerlaufspannung der Konstant-Stromquelle 3 auf einen den Sicherheitsvorschriften entsprechenden Wert abgesenkt und nachfolgend das Drahtvorschubgerät 12 aktiviert. Tritt innerhalb einer bestimmten, voreinstellbaren, relativ kurzen Zeitspanne nach dem Start der Konstant-Stromquelle 3 keine Berührung des dem Werkstück 17 zugeordneten Endes des Schweißdraht 14 mit dem Werkstück 17 auf, so wird beispielsweise der Schalter 161 abermals geschlossen und die Spannung des Kondensators 136 auf einen den Sicherheitsvorschriften entsprechenden Wert abgesenkt.

Berührt innerhalb der Zeitspanne das Schweißdrahtende das Werkstück 17, so wird durch die Konstant-Spannungsquelle 132 bzw. den Kondensator 136 durch Aktivieren des Schalters 139 ebenso ein steiler Stromanstieg auf den Maximalwert 146, wie in Fig. 14 beschrieben, erzielt, worauf nach Erreichen dieses Maximalwertes 146 der von der Konstant-Spannungsquelle 132, insbesondere dem Kondensator 136, abgegebene Strom absinkt und der Lichtbogen 16 durch den ansteigenden Strom von der Konstant-Stromquelle 3 aufrecht erhalten wird.

Es kann also festgehalten werden, daß die Konstant-Spannungsquelle 132, wenn diese parallel mit der Konstant-Stromquelle 3 geschaltet ist und den Schalter 161 aufweist, keine eigene Ladeschaltung besitzen muß, und in der Startphase der Konstänt-Stromquelle 3 vom Ausgang der Konstant-Stromquelle 3 selbst auf einen entsprechenden hohen Spannungswert aufgeladen wird. Hierzu ist es beispielsweise möglich, daß vor den Ausgangs- bzw. den Schweißbuchsen der Konstant-Stromquelle 3 zusätzlich Schalter angeordnet werden können, sodaß während des Ladevorganges für den Kondensator 136 kein Stromkreis über die Schweißbuchsen gebildet werden kann. Gleichzeitig mit dem Aktivieren des Schalters 161 können die zusätzlich vor den Schweißbuchsen angeordneten Schalter geschlossen werden, sodaß ein Zündvorgang durchgeführt werden kann.

Selbstverständlich sind die zuvor beschriebenen, erfindungsgemäßen Verfahren bei sämtlichen aus dem Stand der Technik bekannten abschmelzenden Elektroden, also zum Beispiel sowohl bei Drahtelektroden als auch bei Stabelektroden, welche bevorzugt mit einer Umhüllung versehen sind und auch ohne Schutzgasatmosphäre verarbeitet werden, anwendbar.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

### Bezugszeichenaufstellung

- 1: Schweißgerät
- 2: Schweißstromquelle
- 3: Konstant-Stromquelle
- 4: Leistungsteil
- 5: Steuervorrichtung

- 6: Umschaltglied
- 7: Steuerventil
- 8: Versorgungsleitung
- 9: Gas
- 10: Gasspeicher

- 11: Schweißbrenner
- 12: Drahtvorschubgerät
- 13: Versorgungsleitung
- 14: Schweißdraht
- 15: Vorratstrommel

- 16: Lichtbogen
- 17: Werkstück
- 18: Versorgungsleitung
- 19: Kühlkreislauf
- 20: Strömungswächter

- 21: Wasserbehälter
- 22: Ein- und/oder Ausgabevorrichtung
- 23: Versorgungsleitung
- 24: Versorgungsleitung
- 25: Spannungsversorgungsnetz

- 26: Versorgungsleitung
- 27: Steuerleitung
- 28: Steuerleitung
- 29: Fördervorrichtung
- 30: Förderrolle

- 31: Förderrolle
- 32: Konstant-Spannungsquelle
- 33: Leitung
- 34: Leitung
- 35: Steuerleitung

- 36: Zeitpunkt
- 37: Zeitpunkt
- 38: Zeitpunkt
- 39: Wert
- 40: Maximalwert

- 41: Zeitpunkt
- 42: Zeitpunkt
- 43: Stromwert
- 44: Zeitpunkt
- 45: Lichtbogenspannung

- 46: Referenzwert
- 47: Zeitdauer
- 48: Zeitpunkt
- 49: Zeitpunkt
- 50: Minimalwert

- 51: Minimalwert
- 52: Zeitpunkt
- 53: Schweißimpuls
- 54: Schweißimpuls
- 55: Zeitpunkt

- 56: Zeitpunkt
- 57: Zeitpunkt
- 58: Wert
- 59: Zeitdauer
- 60: Zeitpunkt

- 61: Wert
- 62: Zeitpunkt
- 63: Lichtbogenspannung
- 64: Zeitdauer
- 65: Wert

- 66: Zeitpunkt
- 67: Sollwert
- 68: Zeitpunkt
- 69: Wert
- 70: Minimalwert

- 71: Zeitpunkt
- 72: Schweißimpuls
- 73: Zeitdauer
- 74: Kondensator
- 75: Diode

- 76: Schalter

- 123: Versorgungsleitung
- 124: Versorgungsleitung
- 125: Spannungsversorgungsnetz

- 126: Versorgungsleitung
- 127: Steuerleitung
- 128: Steuerleitung
- 129: Fördervorrichtung
- 130: Förderrolle

- 131: Förderrolle
- 132: Konstant-Spannungsquelle
- 133: Leitung
- 134: Leitung
- 135: Steuerleitung

- 136: Kondensator
- 137: Aufladevorrichtung
- 138: Diode
- 139: Schalter
- 140: Steuereinrichtung

- 141: Stromwandler
- 142: Zeitpunkt
- 143: Zeitpunkt
- 144: Zeitpunkt
- 145: Wert

- 146: Maximalwert
- 147: Zeitpunkt
- 148: Zeitpunkt
- 149: Stromwert
- 150: Zeitpunkt

- 151: Lichtbogenspannung
- 152: Referenzwert
- 153: Zeitdauer
- 154: Zeitpunkt
- 155: Zeitpunkt

- 156: Minimalwert
- 157: Minimalwert
- 158: Zeitpunkt
- 159: Schweißimpuls
- 160: Schweißimpuls

- 161: Schalter
- 162: Steuerleitung

## Patentansprüche

1. Verfahren zum erstmaligen Zünden eines Lichtbogens (16) zwischen einem Werkstück (17) und einer abschmelzenden Elektrode, bei dem die Elektrode mit Energie aus zumindest einer Stromquelle (3) versorgt wird und durch Berühren der Elektrode mit dem Werkstück (17) ein Lichtbogen (16) gezündet wird, **dadurch gekennzeichnet, daß** die Elektrode vor dem Zünden des Lichtbogens (16) oder dem Berühren der abschmelzenden Elektrode mit dem Werkstück (17) mit Energie von einer Konstant-Stromquelle (3) und einer Konstant-Spannungsquelle (32, 132) versorgt wird und von der Konstant-Spannungsquelle (32, 132) eine hohe Gleichspannung von über 100 V abgegeben wird, die beim erstmaligen Berühren der Elektrode mit dem Werkstück (17) einen steilen Stromanstieg auf einen voreinstellbaren Maximalwert (40, 146) bewirkt, worauf nach Erreichen des Maximalwertes (40, 146) der von der Konstant-Spannungsquelle (32, 132) abgegebene Strom absinkt und der Lichtbogen (16) durch den ansteigenden Strom von der Konstant-Stromquelle (3) aufrecht erhalten wird.

2. Verfahren nach Anspruch 1, **dadurch gekennzeichnet, daß** nach dem Erreichen eines voreinstellbaren Stromwertes (43, 149) der Stromquelle von der Steuervorrichtung (5) eine Lichtbogenspannung (45, 151) erfaßt wird und anschließend diese in einem Speicher hinterlegt wird.

3. Verfahren nach Anspruch 1 oder 2, **dadurch gekennzeichnet, daß** die Höhe des Stromes, insbesondere des Stromwertes (43, 149) der Stromquelle (3) solange konstant gehalten wird, bis die Lichtbogenspannung (45, 151) einen von der Steuervorrichtung (5) festgelegten Referenzwert (46, 152) erreicht bzw. überschreitet, worauf der Strom auf einen voreinstellbaren Minimalwert (50, 156) abgesenkt wird.

4. Verfahren nach einem der vorhergehenden Ansprüche, **dadurch gekennzeichnet, daß** beim Erreichen bzw. beim Unterschreiten des voreinstellbaren Minimalwertes (51, 157) der Lichtbogenspannung (63, 151) der Schweißprozeß gestartet wird.

5. Verfahren nach einem der vorhergehenden Ansprüche, **dadurch gekennzeichnet, daß** die Messung der Lichtbogenspannung (63, 151) für den Referenzwert (46, 152) am Kontaktrohr des Schweißbrenners (11) erfolgt.

6. Verfahren nach einem der vorhergehenden Ansprüche, **dadurch gekennzeichnet, daß** die Konstant-Spannungsquelle (32, 132) der Konstant-Stromquelle (3) parallel geschaltet wird.

7. Verfahren nach einem der Ansprüche 1 bis 5, **dadurch gekennzeichnet, daß** die Konstant-Spannungsquelle (32, 132) in Serie zur Konstant-Stromquelle (3) geschaltet wird.

8. Verfahren nach einem der vorhergehenden Ansprüche, **dadurch gekennzeichnet, daß** die Konstant-Spannungsquelle (32, 132) durch einen Energiespeicher, insbesondere einen Kondensator (74, 136) gebildet wird, der durch eine Ladevorrichtung (137) auf einen voreingestellten Spannungswert geladen wird.

9. Verfahren nach einem der vorhergehenden Ansprüche, **dadurch gekennzeichnet, daß** die Konstant-Spannungsquelle (32,132), insbesondere der Kondensator (74, 136), in der Startphase der Konstant-Stromquelle (3) an deren Ausgang geschaltet und von dieser auf einen entsprechend hohen Spannungswert aufgeladen wird.

10. Verfahren nach einem der vorhergehenden Ansprüche, **dadurch gekennzeichnet, daß** von der Konstant-Stromquelle (3) der Strom solange konstant gehalten wird, bis sich eine entsprechende Lichtbogenlänge am Schweißdraht (14) ausbildet.

11. Verfahren nach einem der vorhergehenden Ansprüche, **dadurch gekennzeichnet, daß** die Steuervorrichtung (5) durch Erfassen der Lichtbogenspannung (63, 151) die Lichtbogenlänge ermittelt.

12. Verfahren nach einem der vorhergehenden Ansprüche, **dadurch gekennzeichnet, daß** beim Aktivieren des Schweißprozesses die Drahtvorschubgeschwindigkeit in Richtung des Werkstückes (17) konstant gehalten wird.

13. Verfahren nach einem der vorhergehenden Ansprüche, **dadurch gekennzeichnet, daß** der Schweißbrenner (11) ab dem Zeitpunkt, wo die Lichtbogenspannung (63, 151) einen Minimalwert (51, 157) erreicht bzw. unterschreitet, relativ zum Werkstück (17) bewegt wird.

14. Verfahren zum erstmaligen Zünden eines Lichtbogens (16) zwischen einem Werkstück (17) und einer abzuschmelzenden Elektrode, bei dem die Elektrode mit Energie aus zumindest einer Konstant-Stromquelle (3) versorgt wird und durch Berühren der Elektrode mit dem Werkstück (17) ein Lichtbogen (16) gezündet wird, **dadurch gekennzeichnet, daß** zur Zündung des Lichtbogens (16) die Energie von einer Konstant-Spannungsquelle (32, 132) mit der Energie der Konstant-Stromquelle (3) überlagert wird, wobei die Energie von der Konstant-Spannungsquelle (32, 132) in Abhängigkeit eines voreinstellbaren Stromwertes und/oder Stromanstieges der Konstant-Stromquelle (3) zugeschaltet wird, wobei ein in Serie zu der Konstant-Spannungsquelle (32, 132) angeordneter elektronischer Schalter (76) geschlossen wird, und ein steiler Stromanstieg auf einen voreinstellbaren Maximalwert (40, 146) bewirkt wird, worauf nach Erreichen des Maximalwertes (40, 146) der von der Konstant-Spannungsquelle (32, 132) abgegebene Strom absinkt und der Lichtbogen (16) durch den ansteigenden Strom von der Konstant-Stromquelle (32, 132) aufrecht erhalten wird.

15. Verfahren nach Anspruch 14, **dadurch gekennzeichnet, daß** nach dem Erreichen eines voreinstellbaren Stromwertes (43, 149) der Konstant-Stromquelle von der Steuervorrichtung (5) eine Lichtbogenspannung (45, 151) erfaßt und anschließend diese in einem Speicher hinterlegt wird.

16. Verfahren nach Anspruch 14 oder 15, **dadurch gekennzeichnet, daß** die Höhe des Stromes, insbesondere der Stromwert (43, 149) der Konstant-Stromquelle (3) solange konstant gehalten wird, bis die Lichtbogenspannung (45, 151) einen von der Steuervorrichtung (5) festgelegten Referenzwert (46,152) erreicht bzw. überschreitet, worauf der Strom auf einen voreinstellbaren Minimalwert (50, 156) abgesenkt wird.

17. Verfahren nach einem der Ansprüche 14 bis 16, **dadurch gekennzeichnet, daß** beim Erreichen bzw. beim Unterschreiten des voreinstellbaren Minimalwertes (51, 157) der Lichtbogenspannung (45, 151) der Schweißprozeß gestartet wird.

18. Verfahren nach einem der Ansprüche 14 bis 17, **dadurch gekennzeichnet, daß** die Messung der Lichtbogenspannung (45, 151) für den Referenzwert (46, 152) am Kontaktrohr des Schweißbrenners (11) erfolgt.

19. Verfahren nach einem der Ansprüche 14 bis 18, **dadurch gekennzeichnet, daß** von der Konstant-Stromquelle (3) der Strom solange konstant gehalten wird, bis sich eine entsprechende Lichtbogenlänge am Schweißdraht (14) ausbildet.

20. Verfahren nach einem der Ansprüche 14 bis 19, **dadurch gekennzeichnet, daß** die Steuervorrichtung (5) durch Erfassen der Lichtbogenspannung (45, 151) die Lichtbogenlänge ermittelt.

21. Verfahren nach einem der Ansprüche 14 bis 20, **dadurch gekennzeichnet, daß** beim Aktivieren des Schweißprozesses die Drahtvorschubgeschwindigkeit in Richtung des Werkstückes (17) konstant gehalten wird.

22. Verfahren nach einem der Ansprüche 14 bis 21, **dadurch gekennzeichnet, daß** der Schweißbrenner (11) ab dem Zeitpunkt, wo die Lichtbogenspannung (45, 151) einen Minimalwert (51,157) erreicht bzw. unterschreitet, relativ zum Werkstück (17) bewegt wird.

23. Verfahren nach einem der Ansprüche 14 bis 22, **dadurch gekennzeichnet, daß** als Elektrode eine Stabelektrode eingesetzt wird.

24. Verfahren nach einem der Ansprüche 14 bis 23, **dadurch gekennzeichnet, daß** als Elektrode eine Drahtelektrode eingesetzt wird

25. Einrichtung zur Durchführung des Verfahrens nach einem der vorhergehenden Ansprüche 14 bis 24, bei dem eine Konstant-Spannungsquelle (132) aus einem Energiespeicher, insbesondere aus einem Kondensator (136), besteht, der über eine Aufladevorrichtung (137) auf einen voreinstellbaren Spannungswert aufladbar ist, **dadurch gekennzeichnet, daß** die Konstant-Spannungsquelle (132) einer Konstant-Stromquelle (3) parallel geschaltet ist und in Serie zur Konstant-Spannungsquelle (132) ein elektronischer Schalter (139) vorgesehen ist.

26. Einrichtung nach Anspruch 25, **dadurch gekennzeichnet, daß** der elektronische Schalter (139) über eine Steuereinrichtung (140) ansteuerbar ist.

27. Einrichtung nach Anspruch 25 oder 26, **dadurch gekennzeichnet, daß** die Steuereinrichtung (140) über einen Signalgeber, beispielsweise einen Stromwandler (141), aktivierbar ist.

28. Einrichtung nach einem der Ansprüche 25 bis 27, **dadurch gekennzeichnet, daß** der Signalgeber, insbesondere der Stromwandler (141), im Stromkreis der Konstant-Stromquelle (3) zum Schweißbrenner (11) bzw. zum Werkstück (17) angeordnet ist.

29. Einrichtung nach einem der Ansprüche 25 bis 28, **dadurch gekennzeichnet, daß** zwischen Energiespeicher und elektronischem Schalter (139) eine Diode (138) vorgesehen ist.

30. Einrichtung nach einem der Ansprüche 25 bis 29, **dadurch gekennzeichnet, daß** die Konstant-Spannungsquelle (132), insbesondere der Kondensator (136), in der Startphase der Konstant-Stromquelle (3) an deren Ausgang geschaltet ist und von dieser auf einen entsprechend hohen Spannungswert aufladbar ist.

31. Einrichtung nach einem der Ansprüche 25 bis 30, **dadurch gekennzeichnet, daß** der Diode (138) und dem elektronischen Schalter (139) ein Schalter (161) parallel geschaltet ist, der über die Steuervorrichtung (5) der Konstant-Stromquelle (3) steuerbar ist.

## Claims

1. Method of igniting an arc (16) for the first time between a workpiece (17) and a fusible electrode, whereby the electrode is supplied with energy from at least one current source (3) and an arc (16) is ignited by bringing the electrode into contact with the workpiece (17), **characterised in that** before the arc (16) is ignited or the fusible electrode brought into contact with the workpiece (17), the electrode is supplied with energy from a constant current source (3) and a constant voltage source (32, 132) and a high direct voltage of more than 100 V is output from the constant voltage source (32, 132) causing a sharp rise in current up to a pre-settable maximum value (40, 146) when the electrode comes into contact with the workpiece (17) for the first time, and once the maximum value (40, 146) has been reached, the current dispensed from by the constant voltage source (32, 132) drops and the arc (16) is maintained by the rising current output from the constant current source (3).

2. Method as claimed in claim 1, **characterised in that**, when a pre-settable current value (43, 149) of the current source (3) has been reached, an arc voltage (45, 151) is detected by the control system (5) and is then stored in a memory.

3. Method as claimed in claim 1 or 2, **characterised in that** the level of the current, in particular the current value (43, 149) of the current source (3), is kept constant until the arc voltage (45, 151) reaches or exceeds a reference value (46, 152) fixed by the control system (5), whereupon the current is reduced to a pre-settable minimum value (50, 156).

4. Method as claimed in one of the preceding claims, **characterised in that** the welding process is started once the arc voltage (63, 151) reaches or falls below the pre-settable minimum value (51, 157).

5. Method as claimed in one of the preceding claims, **characterised in that** the measurement of the arc voltage (63, 151) for the reference value (46, 152) is taken on the contact sleeve of the welding torch (11).

6. Method as claimed in one of the preceding claims, **characterised in that** the constant voltage source (32, 132) is connected in parallel with the constant current source (3).

7. Method as claimed in one of claims 1 to 5, **characterised in that** the constant voltage source (32, 132) is connected in series with the constant current source (3).

8. Method as claimed in one of the preceding claims, **characterised in that** the constant voltage source (32, 132) is an energy storage device, in particular a capacitor (74, 136), which is charged to a pre-set voltage value by means of a charging device (137).

9. Method as claimed in one of the preceding claims, **characterised in that** the constant voltage source (32, 132), in particular the capacitor (74, 136), is connected to the output terminal of the constant current source (3) during the start-up phase of the latter and is charged to a correspondingly high voltage value by it.

10. Method as claimed in one of the preceding claims, **characterised in that** the current is kept constant by the constant current source (3) until an appropriate arc length is formed at the welding wire (14).

11. Method as claimed in one of the preceding claims, **characterised in that** the control system (5) determines the arc length by detecting the arc voltage (63, 151).

12. Method as claimed in one of the preceding claims, **characterised in that** when the welding process is activated, the wire feed rate in the direction of the workpiece (17) is kept constant.

13. Method as claimed in one of the preceding claims, **characterised in that**, from the instant at which the arc voltage (63, 151) reaches or falls below a minimum value (51, 157), the welding torch (11) is displaced relative to the workpiece (17).

14. Method of igniting an arc (16) between a workpiece (17) and a fusible electrode for the first time, whereby the electrode is supplied with energy from at least one constant current source (3) and an arc (16) is ignited by bringing the electrode into contact with the workpiece (17), **characterised in that** the energy from a constant voltage source (32, 132) is superposed on the energy of the constant current source (3) in order to ignite the arc (16) and the energy from the constant voltage source (32, 132) is connected in depending on a pre-settable current value and/or rise in current of the constant current source (3), and an electronic switch (76) is connected in series with the constant voltage source (32, 132) causing a sharp rise in current up to a pre-settable maximum value (40, 146) and when the maximum value (40, 146) is reached, the current dispensed from the constant voltage source (32, 132) is reduced and the arc (16) maintained by the rising current from the constant current source (32, 132).

15. Method as claimed in claim 14, **characterised in that**, when a pre-settable current value (43, 149) of the constant current source has been reached, an arc voltage (45, 151) is detected by the control system (5) and is then stored in a memory.

16. Method as claimed in claim 14 or 15, **characterised in that** the level of the current, in particular the current value (43, 149) of the constant current source (3), is kept constant until the arc voltage (45, 151) reaches or exceeds a reference value (46, 152) fixed by the control system (5), whereupon the current is reduced to a pre-settable minimum value (50, 156).

17. Method as claimed in one of claims 14 to 16, **characterised in that** the welding process is started once the arc voltage (45, 151) reaches or falls below the pre-settable minimum value (51, 157).

18. Method as claimed in one of claims 14 to 17, **characterised in that** the measurement of the arc voltage (45, 151) for the reference value (46, 152) is taken on the contact sleeve of the welding torch (11).

19. Method as claimed in one of claims 14 to 18, **characterised in that** the current is kept constant by the constant current source (3) until an appropriate arc length is formed at the welding wire (14).

20. Method as claimed in one of claims 14 to 19, **characterised in that** the control system (5) determines the arc length by detecting the arc voltage (45, 151).

21. Method as claimed in one claims 14 to 20, **characterised in that** when the welding process is activated, the wire feed rate in the direction of the workpiece (17) is kept constant.

22. Method as claimed in one of claims 14 to 21, **characterised in that**, from the instant at which the arc voltage (45, 151) reaches or falls below a minimum value (51, 157), the welding torch (11) is displaced relative to the workpiece (17).

23. Method as claimed in one of claims 14 to 22, **characterised in that** the electrode used is a bar electrode.

24. Method as claimed in one of claims 14 to 23, **characterised in that** the electrode used is a wire electrode.

25. System for implementing the method as claimed in one of the preceding claims 14 to 24, in which a constant voltage source (132) is provided in the form of an energy storage device, in particular a capacitor (136), which can be charged to pre-settable voltage value by means of a charging device (137), **characterised in that** the constant voltage source (132) is connected in parallel with a constant current source (3) and an electronic switch (139) is provided in series with the constant voltage source (132).

26. System as claimed in claim 25, **characterised in that** the electronic switch (139) may be activated by means of a control unit (140).

27. System as claimed in claim 25 or 26, **characterised in that** the control unit (140) may be activated via a signal transmitter, for example a current transformer (141).

28. System as claimed in one of claims 25 to 27, **characterised in that** the signal transmitter, in particular the current transformer (141), is arranged in the current circuit of the constant current source (3) to the welding torch (11) and the workpiece (17).

29. System as claimed in one of claims 25 to 28, **characterised in that** a diode (138) is provided between the energy storage device and electronic switch (139).

30. System as claimed in one of claims 25 to 29, **characterised in that** the constant voltage source (132), in particular the capacitor (136), is connected to the output of the constant current source (3) during the start-up phase of the latter and can be charged thereby to a correspondingly high voltage value.

31. System as claimed in one of claims 25 to 30, **characterised in that** a switch (161) is connected in parallel with the diode (138) and the electronic switch (139), which is controllable via the control system (5) of the constant current source (3).

## Revendications

1. Procédé d'amorçage initial d'un arc (16) entre une pièce (17) et une électrode fusible, où l'électrode est alimentée en énergie d'au moins une source de courant (3) et, par le contact de l'électrode avec la pièce (17), un arc (16) est amorcé, **caractérisé en ce que** l'électrode, avant l'amorçage de l'arc (16) ou avant la mise en contact de l'électrode fusible avec la pièce (17), est alimentée en énergie d'une source de courant constant (3) et d'une source de tension constante (32, 132) et est émis par la source de tension constante (32, 132) une tension continue élevée de plus de 100 V qui, lors de la première mise en contact de l'électrode avec la pièce (17) entraîne une forte montée du courant à une valeur maximale préréglable (40, 146), à la suite de quoi, après l'atteinte de la valeur maximale (40, 146), le courant émis par la source de tension constante (32, 132) diminue et l'arc (16) est maintenu par le courant qui augmente de la source de courant constant (3).

2. Procédé selon la revendication 1, **caractérisé en ce qu'**après l'atteinte d'une valeur de courant préréglable (43, 149) de la source de courant, par le dispositif de commande (5), une tension (45, 151) de l'arc est détectée et est stockée ensuite dans un dispositif de stockage.

3. Procédé selon la revendication 1 ou 2, **caractérisé en ce que** la hauteur du courant, notamment de la valeur de courant (43, 149) de la source de courant (3) est maintenue constante jusqu'à ce que la tension (45, 151) de l'arc atteint ou dépasse une valeur de référence (46, 152) fixée par le dispositif de commande (5), et ensuite le courant est abaissée à une valeur minimale préréglable (50, 156).

4. Procédé selon l'une des revendications précédentes, **caractérisé en ce que** lors de l'atteinte, respectivement de la non-atteinte de la valeur minimale préréglable (51, 157) de la tension (63, 151) de l'arc, le processus de soudage est démarré.

5. Procédé selon l'une des revendications précédentes, **caractérisé en ce que** la mesure de la tension (63, 151) de l'arc pour la valeur de référence (46, 152) a lieu au tube de contact du chalumeau à souder (11).

6. Procédé selon l'une des revendications précédentes, **caractérisé en ce que** la source de tension constante (32, 132) est commutée parallèlement à la source de courant constant (3).

7. Procédé selon l'une des revendications 1 à 5, **caractérisé en ce que** la source de tension constante (32, 132) est commutée en série à la source de courant constant (3).

8. Procédé selon l'une des revendications précédentes, **caractérisé en ce que** la source de tension constante (32, 132) est formée par un accumulateur d'énergie, notamment un condensateur (74, 136) qui est chargé par un dispositif de charge (137) à une valeur de tension préréglée.

9. Procédé selon l'une des revendications précédentes, **caractérisé en ce que** la source de tension constante (32, 132), notamment le condensateur (74, 136), est commuté dans la phase de démarrage de la source de courant constant (3) à la sortie de celle-ci et est chargée par celle-ci à une valeur de tension élevée correspondante.

10. Procédé selon l'une des revendications précédentes, **caractérisé en ce que** par la source de courant constant (3), le courant est maintenu constant jusqu'à ce qu'il se forme une longueur d'arc correspondante au fil d'apport (14).

11. Procédé selon l'une des revendications précédentes, **caractérisé en ce que** le dispositif de commande (5), par la détection de la tension (63, 151) de l'arc, détermine la longueur de l'arc.

12. Procédé selon l'une des revendications précédentes, **caractérisé en ce que** lors de l'activation du processus de soudage, la vitesse d'avancement du fil, en direction de la pièce (17), est maintenue constante.

13. Procédé selon l'une des revendications précédentes, **caractérisé en ce que** le chalumeau (11) est déplacé relativement à la pièce (17) à partir de l'instant où la tension (63, 151) de l'arc atteint, respectivement, passe en dessous d'une valeur minimale (51, 157).

14. Procédé pour l'amorçage initial d'un arc (16) entre une pièce (17) et une électrode fusible, où l'électrode est alimentée en énergie à partir d'au moins une source de courant constant (3) et, par la mise en contact de l'électrode avec la pièce (17), un arc (16) est amorcé, **caractérisé en ce que** pour l'amorçage de l'arc (16), l'énergie d'une source de tension constante (32, 132) est superposée à l'énergie de la source de courant constant (3), où l'énergie de la source de tension constante (32, 132) est connectée en fonction d'une valeur de courant préréglable et/ou de la montée de courant de la source de courant constant (3), où un commutateur électronique (76) monté en série avec la source de tension constante (32, 132) est fermé, et une forte montée du courant à une valeur maximale préréglable (40, 146) est provoquée, à la suite de quoi, après l'atteinte de la valeur maximale (40, 146), le courant émis par la source de tension constante (32, 132) diminue, et l'arc (16) est maintenu par le courant qui augmente de la source de tension constante (32, 132).

15. Procédé selon la revendication 14, **caractérisé en ce qu'**après l'atteinte d'une valeur de courant préréglable (43, 149) de la source de courant constant, par le dispositif de commande (5), une tension (45, 151) de l'arc est détectée, et celle-ci est stockée ensuite dans un dispositif de stockage.

16. Procédé selon la revendication 14 ou 15, **caractérisé en ce que** l'intensité du courant, notamment la valeur de courant (43, 149) de la source de courant constant (3) est maintenue constante jusqu'à ce que la tension (45, 151) de l'arc atteint, respectivement dépasse une valeur de référence (46, 152) fixée par le dispositif de commande (5), et ensuite le courant est abaissé à une valeur minimale préréglable (50, 156).

17. Procédé selon l'une des revendications 14 à 16, **caractérisé en ce que** lors de l'atteinte, respectivement de la non-atteinte de la valeur minimale préréglable (51, 157) de la tension (45, 151) de l'arc, le processus de soudage est démarré.

18. Procédé selon l'une des revendications 14 à 17, **caractérisé en ce que** la mesure de la tension (45, 151) de l'arc pour la valeur de référence (46, 152) a lieu au tube de contact du chalumeau à souder (11).

19. Procédé selon l'une des revendications 14 à 18, **caractérisé en ce que** par la source de courant constant (3), le courant est maintenu constant jusqu'à ce qu'une longueur d'arc correspondante se forme au fil d'apport (14).

20. Procédé selon l'une des revendications 14 à 19, **caractérisé en ce que** le dispositif de commande (5), par la détection de la tension (45, 151) de l'arc, détermine la longueur de l'arc.

21. Procédé selon l'une des revendications 14 à 20, **caractérisé en ce que** lors de l'activation du processus de soudage, la vitesse d'avancement du fil en direction de la pièce (17) est maintenue constante.

22. Procédé selon l'une des revendications 14 à 21, **caractérisé en ce que** le chalumeau à souder (11), à partir de l'instant où la tension (45, 151) de l'arc atteint respectivement reste en dessous d'une valeur minimale (51, 157), est déplacé relativement à la pièce (17).

23. Procédé selon l'une des revendications 14 à 22, **caractérisé en ce qu'**une électrode en baguette est utilisée comme électrode.

24. Procédé selon l'une des revendications 14 à 23, **caractérisé en ce qu'**un fil-électrode est utilisé comme électrode.

25. Installation pour la mise en oeuvre du procédé selon l'une des revendications 14 à 24, où une source de tension constante (132) est constituée d'un accumulateur d'énergie, notamment d'un condensateur (136), qui peut être chargé par un dispositif de charge (137) à une valeur de tension préréglable, **caractérisée en ce que** la source de tension constante (132) est commutée parallèlement à une source de courant constant (3) et qu'il est prévu en série à la source de tension constante (132) un commutateur électronique (139).

26. Installation selon la revendication 25, **caractérisée en ce que** le commutateur électronique (139) peut être commandé par une installation de commande (140).

27. Installation selon la revendication 25 ou 26, **caractérisée en ce que** l'installation de commande (140) peut être activée par un transmetteur de signaux, par exemple, un convertisseur de courant (141).

28. Installation selon l'une des revendications 25 à 27, **caractérisée en ce que** le transmetteur de signaux, notamment le convertisseur de courant (141), est disposé dans le circuit de la source de courant constant (3) au chalumeau (11), respectivement à la pièce (17).

29. Installation selon l'une des revendications 25 à 28, **caractérisée en ce qu'**il est prévu entre l'accumulateur d'énergie et le commutateur électronique (139) une diode (138).

30. Installation selon l'une des revendications 25 à 29, **caractérisée en ce que** la source de tension constante (132), notamment le condensateur (136), est commuté en phase de démarrage de la source de courant constant (3) à la sortie de celle-ci et peut être chargé par celle-ci à une valeur de tension élevée correspondante.

31. Installation selon l'une des revendications 25 à 30, **caractérisée en ce qu'**il est commuté parallèlement à la diode (138) et au commutateur électronique (139) un commutateur (161) qui peut être commandé par le dispositif de commande (5) de la source de courant constant (3).
